# EUROPÄISCHE PATENTSCHRIFT

(11) **EP 3 523 581 B1**
(45) Veröffentlichungstag und Bekanntmachung des Hinweises auf die Patenterteilung: **04.11.2020**
(21) Anmeldenummer: 17777007.0
(22) Anmeldetag: 26.09.2017
(51) Int. Cl.: F24S 50/20, F24S 50/80

(54) **KALIBRIERUNGSVERFAHREN UND KALIBRIERUNGSVORRICHTUNG FÜR EINE GRUPPE VON REFLEKTOREN ZUR KONZENTRATION VON SONNENSTRAHLUNG AUF EINEN STRAHLUNGSEMPFÄNGER**
CALIBRATION METHOD AND CALIBRATION DEVICE FOR A GROUP OF REFLECTORS FOR CONCENTRATING SOLAR RADIATION ON A RADIATION RECEIVER
PROCÉDÉ D'ÉTALONNAGE ET DISPOSITIF D'ÉTALONNAGE POUR UN GROUPE DE RÉFLECTEURS DESTINÉS À CONCENTRER DES RADIATIONS SOLAIRES SUR UN RÉCEPTEUR DE RADIATIONS

(30) Priorität: 06.10.2016 DE 102016119000
(43) Veröffentlichungstag der Anmeldung: 14.08.2019
(73) Patentinhaber: Fraunhofer-Gesellschaft zur Förderung der angewandten Forschung e.V., 80686 München (DE)
(72) Erfinder: BERN, Gregor, 79106 Freiburg (DE); SCHOETTL, Peter, 79111 Freiburg (DE); VAN ROOYEN, De Wet, 79110 Freiburg (DE); NITZ, Peter, 79194 Gundelfingen (DE); HEIMSATH, Anna, 79117 Freiburg (DE)
(74) Vertreter: Lemcke, Brommer & Partner Patentanwälte Partnerschaft mbB
(86) Internationale Anmeldenummer: PCT/EP2017/074365
(87) Internationale Veröffentlichungsnummer: WO 2018/065261

(56) Entgegenhaltungen:
- WO-A1-2009/152573
- CN-A- 102 116 604
- US-A- 4 836 672

## Beschreibung

Die Erfindung betrifft ein Kalibrierungsverfahren und eine Kalibrierungsvorrichtung für eine Gruppe von Reflektoren zur Konzentration von Sonnenstrahlung auf einen Strahlungsempfänger.

Zur Nutzung von Sonnenenergie ist es bekannt, Sonnenstrahlung mittels mehrerer Reflektoren auf einen Strahlungsempfänger zu konzentrieren. Hierbei sind Solar-Turm und Systeme bekannt, bei welchen einfallende Sonnenstrahlung mittels als Heliostaten ausgebildeten Reflektoren auf einen Strahlungsempfänger konzentriert wird. Ebenso sind lineare Kollektoren wie beispielsweise lineare-Fresnel-Kollektoren bekannt, bei welchen einachsig nachgeführte, in Reihen angeordnete Spiegelsysteme die einfallende Sonnenstrahlung auf einen linearen Empfänger konzentrieren, typischerweise über eine zusätzliche sekundäre Konzentratoroptik.

Die auf dem Strahlungsempfänger konzentrierte Strahlung führt zu einer Erwärmung, wobei die Wärmeenergie in elektrische oder mechanische Energie zur weiteren Verwendung umgewandelt werden kann. Ebenso ist die direkte Verwendung der Wärmeenergie beispielsweise für industrielle Prozesse möglich.

Aufgrund der Relativbewegung der Sonne zur Erde müssen die Reflektoren nachgeführt werden damit das Sonnenlicht stetig auf den (ortsfesten) Strahlungsempfänger konzentriert wird. Hierzu weisen die Reflektoren motorische Mittel auf, um eine Position der Reflektoren vorgeben zu können und so eine Nachführung zu dem sich verändernden Sonnenstand zu erzielen.

Problematisch ist hierbei, dass aufgrund von mechanischen Veränderungen, äußeren Einflüssen oder Abnutzungen der motorischen Mittel Fehlstellungen auftreten, so dass die Reflektoren das Sonnenlicht nicht oder nur noch teilweise auf eine vorgesehene Zielposition auf dem Strahlungsempfänger reflektieren. Es sind daher Verfahren bekannt, um eine Reflektor-Zielposition zu ermitteln, welche die tatsächliche Positionierung des Reflektors wiedergibt. Diese Reflektor-Zielposition kann mit der vorgegebenen Reflektor-Soll-Position verglichen und so eine Abweichung festgestellt werden. Die Reflektor-Soll-Position gibt somit die gewünschte örtliche Position der reflektierten Strahlung in einer Zielfläche wieder. Mittels der ermittelten Abweichung zwischen Reflektor-Zielposition und Reflektor-Soll-Position kann eine Kalibrierung einer Steuereinheit der motorischen Mittel für den Reflektor erfolgen.

Aus US 2010/0252024 A1 ist ein Verfahren zum Ausrichten von Heliostaten bekannt, bei welchem um eine energetische Apertur rahmenartig angeordnete Photodetektoren verwendet werden.

Aus US 2011/0317876 A1 ist ein Verfahren zum Ausrichten von Heliostaten bekannt, bei welchem die Reflektion eines Heliostaten zunächst auf einen ersten und anschließend auf einen zweiten, ortsverschiedenen Punkt gerichtet wird. Mittels einer Kamera wird eine Zielfläche, welche den ersten und zweiten Punkt umfasst, bei jeder Positionierung aufgenommen. Durch Vergleich der beiden aufgenommenen Bilder wird die tatsächliche Ausrichtung des Reflektors bestimmt.

Ein solches Kalibrierungsverfahren ist auch im Dokument WO 2009/152573 A1 offenbart.

Dieses Verfahren weist den Nachteil auf, dass die durch die Positionierung des Heliostaten erzielten Helligkeitsunterschiede häufig nicht oder nur ungenau anhand des Kamerabildes zu ermitteln sind, so dass das Kalibrierverfahren fehleranfällig ist.

Der vorliegenden Erfindung liegt daher die Aufgabe zugrunde, die Effizienz der vorbekannten Kalibrierverfahren zu verbessern.

Gelöst ist diese Aufgabe durch ein Kalibrierungsverfahren für eine Gruppe von Reflektoren zur Konzentration von Sonnenstrahlung auf einen Strahlungsempfänger gemäß Anspruch 1 sowie durch eine Kalibrierungsvorrichtung für eine Gruppe von Reflektoren zur Konzentration von Sonnenstrahlung auf einen Strahlungsempfänger gemäß Anspruch 12. Vorteilhafte Ausgestaltungen finden sich in den abhängigen Unteransprüchen.

Die erfindungsgemäße Kalibrierungsvorrichtung ist bevorzugt zur Durchführung des erfindungsgemäßen Kalibrierungsverfahrens, insbesondere einer bevorzugten Ausführungsform hiervon, ausgebildet. Das erfindungsgemäße Kalibrierungsverfahren ist bevorzugt zur Durchführung mittels der erfindungsgemäßen Kalibrierungsvorrichtung, insbesondere einer bevorzugten Ausführungsform hiervon, ausgebildet.

Das erfindungsgemäße Kalibrierungsverfahren für eine Gruppe von Reflektoren zur Konzentration von Sonnenstrahlung auf einen Strahlungsempfänger umfasst folgende Verfahrensschritte:
In einem Verfahrensschritt A erfolgt ein Ausrichten der Reflektoren, um eine Kalibrierfläche zumindest teilweise mit von den Reflektoren reflektierter Sonnenstrahlung zu beaufschlagen. In einem Verfahrensschritt B erfolgt ein Erzeugen einer Änderung der Intensitätsverteilung der auf die Kalibrierfläche auftreffenden Strahlung mittels Ausführen eines Bewegungsmusters durch jeden Reflektor der Gruppe, wobei das Bewegungsmuster jedes Reflektors sich in mindestens einem vorgegebenen Bewegungsmuster-Parameter aus der Gruppe Frequenz der Bewegung, Amplitude der Bewegung, Phasenlage der Bewegung, Bahnkurve der durch den Reflektor reflektierten Sonnenstrahlung innerhalb der Kalibrierfläche, von den Bewegungsmuster-Parametern der anderen Reflektoren unterscheidet. In einem Verfahrensschritt C erfolgt eine Aufnahme von Bildpunktreihen für eine Mehrzahl ortsverschiedener Ortspunkte der Kalibrierfläche mittels zumindest einer Kamera, wobei jede Bildpunktreihe mindestens fünf zeitlich versetzte Bildpunktaufnahmen aufweist.

Es liegt im Rahmen der Erfindung, mittels mehrerer Kameras jeweils eine Bildpunktreihe aufzunehmen. Vorteilhaft ist es jedoch, mittels der Kamera eine Mehrzahl, insbesondere eine Vielzahl von Bildreihen aufzunehmen.

In einem Verfahrensschritt D erfolgt ein Ermitteln eines Spektrums für jede Bildpunktreihe mittels Transformation der Bildpunktreihe in den Frequenzraum. In einem Verfahrensschritt E erfolgt ein Zuordnen einer Spektren-Untermenge zu den Reflektoren abhängig von dem Bewegungsmuster-Parameter des Reflektors. In einem Verfahrensschritt F erfolgt ein Bestimmen einer oder mehrerer Reflektion-Zielpositionen für jeden Reflektor abhängig von zumindest der dem Reflektor zugeordneten Spektren-Untermenge.

Das erfindungsgemäße Kalibrierungsverfahren unterscheidet sich wesentlich von dem vorbekannten Verfahren, indem eine Bildpunktreihe für jeden der Mehrzahl ortsverschiedener Ortspunkte der Kalibrierfläche aufgenommen wird und ein Spektrum für jede Bildpunktreihe mittels Transformation der Bildpunktreihe in den Frequenzraum ermittelt wird.

Die Bestimmung einer oder mehrerer Reflektion-Zielpositionen für jeden Reflektor erfolgt abhängig von der Analyse der Spektren der Bildpunktreihen. Hierdurch ist eine erheblich detailliertere und somit fehlerunanfälligere Analyse der Kameraaufnahmen möglich, verglichen mit dem direkten Helligkeitsvergleich zweier Kamerabilder.

Dies ermöglicht eine präzisere Erfassung der Reflektion-Zielposition eines Reflektors. Aufgrund der höheren Genauigkeit können ebenso Reflektion-Zielpositionen mehrerer sich gleichzeitig bewegender Reflektoren erfasst werden, wodurch die Effizienz des Kalibrierungsverfahrens erheblich gesteigert wird. Weiterhin ermöglicht die höhere Genauigkeit eine Auswertung auch bei geringeren Helligkeitsunterschieden verglichen mit den vorbekannten Verfahren, so dass beispielsweise eine Kalibrierung mit einer Kalibrierfläche, welche sich zumindest teilweise oder bevorzugt vollständig innerhalb einer Empfängerfläche des Strahlungsempfängers befindet und somit eine hohe Strahlungsintensität aufweist, durchgeführt werden kann. Hierdurch wird somit eine Kalibrierung im laufenden Betrieb möglich, ohne dass Energieverluste durch Ausrichten eines zu kalibrierenden Reflektors auf eine separate Kalibrierfläche auftreten. Auch bei Verwenden einer zu einer Empfängerfläche des Strahlungsempfängers separaten Kalibrierfläche ermöglicht das erfindungsgemäße Verfahren eine Leistungssteigerung, da aufgrund der erhöhten Genauigkeit eine schnellere Kalibrierung möglich ist und somit die Strahlungseinbußen auf dem Strahlungsempfänger durch den Kalibriervorgang minimiert werden.

Die erfindungsgemäße Kalibrierungsvorrichtung für eine Gruppe von Reflektoren zur Konzentration von Sonnenstrahlung auf einen Strahlungsempfänger weist eine Gruppe von Reflektoren mit motorischen Mitteln zur Positionierung jedes Reflektors auf, um Sonnenstrahlung auf einen Strahlungsempfänger zu konzentrieren sowie zumindest eine Kamera und eine Kalibrierfläche.

Wesentlich ist, dass die Kalibrierungsvorrichtung eine Kalibrierungseinheit aufweist, welche mit den motorischen Mitteln und der Kamera zusammenwirkend ausgebildet ist, um die folgenden Verfahrensschritte auszuführen:
A) Ausrichten der Reflektoren durch die motorischen Mittel, um die Kalibrierfläche zumindest teilweise mit von den Reflektoren reflektierter Sonnenstrahlung zu beaufschlagen;
B) Erzeugen einer Änderung der Intensitätsverteilung der auf die Kalibrierfläche auftreffenden Strahlung mittels Ausführen eines Bewegungsmusters durch jeden Reflektor der Gruppe, wobei das Bewegungsmuster jedes Reflektors sich in mindestens einem durch die Kalibriervorrichtung vorgegebenen Bewegungsmuster-Parameter aus der Gruppe
   - Frequenz der Bewegung,
   - Amplitude der Bewegung,
   - Phasenlage der Bewegung,
   - Bahnkurve der durch den Reflektor reflektierten Sonnenstrahlung innerhalb der Kalibrierfläche,
      von den Bewegungsmuster-Parametern der anderen Reflektoren unterscheidet;
C) Aufnehmen von Bildpunktreihen für eine Mehrzahl ortsverschiedener Ortspunkte der Kalibrierfläche mittels der Kamera, wobei jede Bildpunktreihe mindestens fünf zeitlich versetzte Bildpunktaufnahmen aufweist;
D) Ermitteln eines Spektrums für jede Bildpunktreihe mittels Transformation der Bildpunktreihe in den Frequenzraum;
E) Zuordnen einer Spektren-Untermenge zu den Reflektoren abhängig von dem Bewegungsmuster-Parameter des Reflektors;
F) Bestimmen einer oder mehrerer Reflektion-Zielpositionen für jeden Reflektor abhängig von zumindest der dem Reflektor zugeordneten Spektren-Untermenge.

Hierdurch ergeben sich die zu dem erfindungsgemäßen Verfahren beschriebenen Vorteile.

Wie eingangs beschrieben, erlaubt das erfindungsgemäße Verfahren aufgrund der hohen Genauigkeit auch eine Auswertung sich überlagernder Änderungen der Intensitätsverteilung auf der Kalibrierfläche aufgrund mehrerer initiierter Bewegungen der Reflektoren. Vorteilhafterweise werden daher gleichzeitig mehrere aus der Gruppe der Reflektoren mit den vorgegebenen Bewegungsmuster-Parametern bewegt, insbesondere bevorzugt alle Reflektoren aus der Gruppe von Reflektoren gleichzeitig. Aufgrund der hohen Präzision, welche insbesondere im Ermitteln eines Spektrums für jede Bildpunktreihe mittels Transformation der Bildpunktreihe in den Frequenzraum begründet ist, können trotz der überlagerten gleichzeitigen Bewegungen Reflektion-Zielpositionen für jeden Reflektor separat extrahiert werden. Die Gruppe von Reflektoren umfasst daher bevorzugt zumindest 10, bevorzugt zumindest 100 Reflektoren.

Vorteilhafterweise erfolgt bei dem Kalibrierungsverfahren eine Filterung der Spektren, bevorzugt eine Filterung auf eine oder mehrere vorgegebenen Frequenzen. Insbesondere ist es vorteilhaft, dass die Filterung in einem Verfahrensschritt D1 zwischen Verfahrensschritt D und E erfolgt.

Bei dem erfindungsgemäßen Verfahren unterscheiden sich die Bewegungsmuster jedes Reflektors durch mindestens einen der genannten Bewegungsmuster-Parameter. Wie nachfolgend ausgeführt, kann dem Bewegungsmuster jedes Reflektors typischerweise eine Frequenz zugeordnet werden. Eine Filterung des Spektrums hinsichtlich dieser Frequenz ermöglicht somit eine Datenreduktion und Ausschluss von Spektrenanteilen, welche nicht oder zumindest nicht maßgeblich durch das Bewegungsmuster initiiert sind. Auch wenn aufgrund des gewählten Bewegungsmuster-Parameters mehreren oder allen Reflektoren der Gruppe von Reflektoren eine gleiche Frequenz zugeordnet wird, so ist dennoch eine solche Filterung vorteilhaft, um Signal- bzw. Spektrenanteile aufgrund äußerer Störungen herauszufiltern.

In einer vorteilhaften Ausführungsform wird das Spektrum eines Reflektors hinsichtlich einer Frequenz gefiltert, welche eine Anregungsfrequenz des Reflektors entspricht oder zumindest mit einer Anregungsfrequenz verglichen werden kann. Hierbei ist es vorteilhaft, die Filterung hinsichtlich der zugeordneten Anregungsfrequenz und eines oder mehrerer ganzzahliger Vielfacher der Anregungsfrequenz vorzunehmen, da typischerweise auch im Frequenzspektrum bei einem ganzzahligen Vielfachen der Anregungsfrequenz noch Anteile vorliegen, welche maßgeblich durch das Bewegungsmuster mit der Anregungsfrequenz initiiert sind. Insbesondere ist es vorteilhaft, eine Filterung hinsichtlich der Anregungsfrequenz und dem Doppelten der Anregungsfrequenz vorzunehmen, so dass das Ergebnis eine Vereinigung der Spektren der Anregungsfrequenz und der doppelten Anregungsfrequenz ist.

In einer vorteilhaften Ausführungsform erfolgt eine Filterung hinsichtlich eines Frequenzbereichs, welcher die vorgenannte Filterfrequenz, insbesondere eine Anregungsfrequenz umgibt. Dies ist darin begründet, dass aufgrund von beispielsweise signaltechnischer oder mechanischer Kapazitäten im Frequenzspektrum die durch die Bewegung maßgeblich initiierten Signale bei einer geringfügig abweichenden Frequenz verglichen mit beispielsweise einer vorgegebenen Bewegungsfrequenz, vorliegen können. Vorteilhafterweise erfolgt die Filterung in einem Bereich, welcher +/- 5% der vorgegebenen Filterfrequenz, bevorzugt +/- 1% der vorgegebenen Filterfrequenz als Abweichung umfasst.

Eine besonders einfach realisierbare und mit hoher Genauigkeit auswertbare bevorzugte Ausgestaltung des erfindungsgemäßen Verfahrens ergibt sich, indem jeder der Reflektoren periodisch bewegt wird, um eine periodische Änderung der Intensitätsverteilung auf der Kalibrierfläche zu erzielen. Hierdurch lässt sich in einfacher Weise jedem Reflektor eine Frequenz der periodischen Bewegung zuordnen, so dass insbesondere bevorzugt eine Filterung wie zuvor beschrieben in einfacher Weise durchgeführt werden kann. Hierbei liegt es im Rahmen der Erfindung, sämtliche Reflektoren oder eine Untermenge der Reflektoren mit einer identischen Frequenz periodisch zu bewegen, sofern sich die Bewegung dieser Reflektoren in zumindest einem der weiteren genannten Bewegungsmuster-Parameter unterscheiden.

Besonders vorteilhaft ist aus den vorgenannten Gründen, dass gleichzeitig jeder der Reflektoren periodisch bewegt wird.

Vorteilhafterweise werden die Reflektoren derart periodisch bewegt, dass die durch die Bewegung der Reflektoren erzielte periodische Änderung der Intensitätsverteilung der Kalibrierfläche im Frequenzbereich 0,001 Hz bis 1 MHz, insbesondere bevorzugt im Bereich 0,01 Hz bis 100 Hz, insbesondere im Bereich 0,1 Hz bis 10 Hz liegt. Dies weist den Vorteil auf, dass die motorischen Mittel zur Ausrichtung der Reflektoren nach der Sonnenposition für die Herstellung der Bewegung genutzt werden können und bevorzugt keine zusätzlichen Aktuatoren zur Herstellung der Bewegung notwendig sind.

Zum Erzeugen der periodischen Bewegung der Reflektoren werden bevorzugt gepulste Antriebssequenzen verwendet. Insbesondere ist es vorteilhaft, periodische Antriebsimpulse an die motorischen Mittel der Reflektoren zu übermitteln, welche an Eigenschwingungen und/oder elastische Eigenschaften des Reflektors, insbesondere des Gesamtsystems umfassend die motorischen Mittel, die Halterung und den Reflektor wie beispielsweise Fundament, Pylon, Tragwerk, Spiegelfacetten, Antriebe, Getriebe, Steuerung, angepasst sind. Hierdurch ergibt sich der Vorteil, dass das dem individuellen Reflektor eigene Schwingungsverhalten ausgenutzt und angeregt wird, so dass Energie zur Anregung eingespart werden kann und mechanische Belastungen gering gehalten werden können.

Für eine Datenanalyse mit hoher Präzision ist es vorteilhaft, dass jede Bildpunktreihe für mehrere Perioden der periodischen Änderung jeweils eine Mehrzahl von Aufnahmen aufweist. Insbesondere ist es vorteilhaft, dass jede Bildpunktreihe zumindest 5 Aufnahmen, bevorzugt zumindest 10, insbesondere zumindest 20 Aufnahmen pro Periode aufweist. Sofern die Bewegungen unterschiedliche Periodendauern aufweisen, ist es vorteilhaft, bei allen Bewegungen, insbesondere bei der Bewegung mit der kürzesten Periode dass jede Bildpunktreihe zumindest 5 Aufnahmen, bevorzugt zumindest 10, insbesondere zumindest 20 Aufnahmen pro Periode aufweist.

Zur Erzielung einer hohen Präzision es vorteilhaft, dass eine Bildpunktreihe zumindest 5 Aufnahmen, bevorzugt zumindest 50, insbesondere zumindest 100 Aufnahmen aufweist.

Zur Erzielung einer hohen Präzision und hohen Auswertegeschwindigkeit ist es vorteilhaft, dass eine Bildpunktreihe mit einer Aufnahmefrequenz größer 1 Aufnahme pro Sekunde (fps, frame per second), bevorzugt größer 20 fps, insbesondere größer 30 fps aufgenommen wird.

In einer bevorzugten Ausprägung werden die Reflektor-Bewegungsfrequenzen mittels der Bewegungsmuster-Parameter Frequenz der Bewegung derart gewählt, dass sie als ganzzahlige Teiler der Messreihenlänge (Anzahl der Bilder) über die Beobachtungszeitspanne auftreten. Insbesondere ist die Wahl von ganzzahligen Teilern, welche keine Vielfache voneinander, bevorzugt primzahlige Teiler, sind, vorteilhaft. Auf diese Weise wird eine Überdeckung der Frequenzsignale als Vielfache voneinander vermieden.

Verfahrensschritt A umfasst vorteilhafterweise das Nachführen der Reflektoren, um eine Relativbewegung der Sonne auszugleichen, so dass auch bei sich änderndem Sonnenstand durch Nachführen der Reflektoren stets die Kalibrierfläche zumindest teilweise beaufschlagt ist. Vorteilhafterweise erfolgt das Nachführen derart, dass das durch die Reflektoren reflektierte Sonnenlicht vollständig innerhalb der Kalibrierfläche reflektiert wird. Das Ausrichten der Reflektoren umfasst somit bevorzugt das Nachführen der Reflektoren hinsichtlich des sich ändernden Sonnenstandes.

Zusätzlich zu dem Ausrichten und bevorzugten Nachführen der Reflektoren wird gemäß Verfahrensschritt B der Gruppe von Reflektoren mittels der motorischen Mittel ein Bewegungsmuster aufgeprägt, welches durch die Bewegungsmuster-Parameter charakterisiert ist. Es liegt im Rahmen der Erfindung, dass sich die Bewegungsmuster-Parameter der Reflektoren hinsichtlich mehrerer Bewegungsmuster-Parameter aus der Gruppe der eingangs genannten Bewegungsmuster-Parameter unterscheiden. Vorzugsweise unterscheiden sich die Bewegungsmuster aller Reflektoren der Gruppe von Reflektoren in zumindest einem gemeinsamen Bewegungsmuster-Parameter, bevorzugt genau in einem gemeinsamen Bewegungsmuster-Parameter. Hierdurch wird die Auswertung und Analyse der Reflektion-Zielposition und der Reflektoren vereinfacht.

Die Aufnahme von Bildpunktreihen für eine Mehrzahl ortsverschiedener Ortspunkte der Kalibrierfläche mittels zumindest einer Kamera kann vorteilhafterweise mit einer an sich bekannten Kamera, insbesondere einer Digital-Kamera, bevorzugt eine HDR (HighDynamicRange)-Kamera erfolgen. Als besonders vorteilhaft hat sich die Verwendung einer sCMOS (scientific CMOS)-Kamera erwiesen. Ebenso ist auch die Verwendung von CCD-Kameras möglich.

Es liegt im Rahmen der Erfindung, dass lediglich eine Teilmenge der Bildpixel der Kamera zur Aufnahme und Auswertung von Bildpunktreihen benutzt werden. Bevorzugt werden alle Bildpixel, welche einem Ortspunkt auf der Kalibrierfläche entsprechen, zur Aufnahme von Bildpunktreihen verwendet. Vorteilhafterweise erfolgt eine Aufnahme von Bildpunktreihen für zumindest 100, bevorzugt zumindest 1000, insbesondere bevorzugt zumindest 10.000 ortsverschiedene Ortspunkte auf der Kalibrierfläche, um eine räumlich hohe Auflösung zu erzielen. Die Bildpunkte sind bevorzugt auf den Kreuzungspunkten eines Rechteckrasters, insbesondere bevorzugt eines Quadratrasters angeordnet. Zur Erzielung einer hohen Auflösung ist es insbesondere vorteilhaft, dass die Bildpunkte auf der Kalibrierfläche mit einer Dichte von zumindest 100 Bildpunkten pro Quadratmeter, vorzugsweise zumindest 1000, insbesondere zumindest 10 000 Bildpunkten pro Quadratmeter angeordnet sind.

In Verfahrensschritt D erfolgt das Ermitteln eines Spektrums für jede Bildpunktreihe bevorzugt mittels Fouriertransformation, insbesondere bevorzugt mittels diskreter Fouriertransformation. Hierdurch kann auf an sich bekannte mathematische Verfahren insbesondere der diskreten Fouriertransformation zurückgegriffen werden. Ebenso liegen andere Verfahren zum Ermitteln eines Spektrums für jede Bildpunktreihe mittels Transformation der Bildpunktreihen in den Frequenzraum im Rahmen der Erfindung wie Laplace-Transformation und KosinusTransformation.

Das Zuordnen einer Spektren-Untermenge zu den Reflektoren abhängig von dem Bewegungsmuster-Parameter des Reflektors kann auf unterschiedliche Weise erfolgen, wie weiter unten genauer beschrieben. Besonders bevorzugt erfolgt eine Zuordnung anhand eines der Bewegungsmuster-Parameter Frequenz der Bewegung, Amplitude der Bewegung, Phasenlage der Bewegung. Diese ermöglichen eine besonders robuste und fehlerunanfällige Analyse.

Die motorischen Mittel zum Festlegen der Ausrichtung des Reflektors und Durchführen des Bewegungsmusters sowie gegebenenfalls Nachführen des Reflektors können in an sich bekannter Weise ausgebildet sein. Insbesondere können die motorischen Mittel zum zweiachsigen Bewegen des Reflektors, insbesondere bevorzugt bei Solar-Turm-Anwendungen ausgebildet sein. Ebenso liegt es im Rahmen der Erfindung, dass die motorischen Mittel zum einachsigen Bewegen des Reflektors ausgebildet sind, insbesondere bei Verwendung mit Linear-Kollektoren mit linearen Strahlungsempfängern. Die Kalibrierungseinheit kann in an sich bekannter Weise als Rechner ausgebildet sein. Insbesondere sind bevorzugt sowohl eine Nachführeinheit, zum Nachführen der Reflektoren hinsichtlich des sich ändernden Sonnenstandes sowie die Kalibrierungsvorrichtung in einer gemeinsamen Rechnereinheit ausgebildet. Die Steuerbefehle der Kalibrierungsvorrichtung an die motorischen Mittel der Reflektoren kann in an sich bekannter Weise erfolgen, insbesondere mittels drahtgestützter Verbindung oder mittels Funkverbindung. Die Kalibriereinheit kann jedoch auch als eigenständige Einheit ausgebildet sein, welche mit der Nachführeinheit über eine Schnittstelle kommuniziert.

In Verfahrensschritt F erfolgt die Bestimmung zumindest einer Reflektion-Zielposition für jeden Reflektor. Dieser wird bevorzugt mit einer Reflektion-Sollposition für jeden Reflektor verglichen, um eine etwaige Abweichung zu ermitteln, welche zur Korrektur der Ansteuerung dieses Reflektors verwendet wird, um die Abweichung zu eliminieren. Hierbei wird in an sich bekannter Weise eine Umrechnung einer etwaigen Ortsabweichung einer Reflektion-Zielposition auf der Kalibrierfläche zu einer Reflektion-Sollposition auf der Kalibrierfläche in entsprechende Parameter der motorischen Mittel der Reflektoren umgerechnet, wie beispielsweise Stellwinkel.

Wie eingangs erwähnt, besteht aufgrund der hohen Präzision des erfindungsgemäßen Verfahrens die Möglichkeit, dass auch bei einer hoher Gesamtintensität der auf die Kalibrierfläche auftreffenden Strahlung dennoch die durch die aufgeprägten Bewegungsmuster der einzelnen Reflektoren bewirkte lokale Intensitätsänderung auf der Kalibrierfläche zu detektieren. Vorteilhafterweise überdeckt die Kalibrierfläche daher eine energetische Apertur des Strahlungsempfängers zumindest teilweise. Hierdurch kann eine Kalibrierung im laufenden Betrieb erfolgen, d. h. während der Zielpunkt des Reflektors innerhalb einer energetischen Apertur des Strahlungsempfängers liegt. Insbesondere ist es daher vorteilhaft, dass die Kalibrierfläche die energetische Apertur des Strahlungsempfängers vollständig überdeckt. Besonders vorteilhaft ist es, dass die Kalibrierfläche die energetische Apertur des Strahlungsempfängers vollständig und zusätzlich einen Randbereich, bevorzugt einen umlaufenden Randbereich der energetischen Apertur überdeckt.

In einer weiteren vorteilhaften Ausführungsform überdeckt die Kalibrierfläche den Rand einer energetischen Apertur des Strahlungsempfängers. Dies ist insbesondere vorteilhaft, wenn nicht oder nur in geringem Umfang Strahlung, welche mittels des Reflektors auf die energetische Apertur reflektiert wird, von der energetischen Apertur auf einen Bilddetektor der Kamera trifft. Dies kann in der Absorption der energetischen Apertur begründet sein. Ebenso kann aufgrund des Blickwinkels der Kamera und einer durch bauliche Elemente wie Rahmen und Halterungen zurückgesetzten Apertur für die Kamera verdeckten Empfängerfläche des Strahlungsempfängers begründet sein. In einer vorteilhaften Ausführungsform erfolgt in Verfahrensschritt C eine Aufnahme von Bildpunktreihen somit zumindest teilweise oder bevorzugt ausschließlich am Rand der energetischen Apertur des Empfängers. Hierbei ist es insbesondere vorteilhaft, wenn sich die Bildpunktreihen umlaufend um die energetische Apertur des Strahlungsempfängers erstrecken, insbesondere, wenn die Kalibrierfläche einen umlaufenden Rahmen um die energetische Apertur bildet. In diesen Fällen ist es somit notwendig, die Bewegungsmuster derart auszugestalten, dass die Reflektionen der Reflektoren zumindest teilweise den Rand der energetischen Apertur überlappen. Aufgrund der hohen Präzision des vorliegenden Verfahrens ist es jedoch möglich, auch bei nur kurzzeitigen Überlappungen bereits eine genaue Analyse der Reflektion-Zielposition auf dem Rand der Kalibrierfläche vorzunehmen, so dass nur ein geringer Energieverlust auftritt.

Vorteilhafterweise erfolgt in Verfahrensschritt E das Erzeugen eines Helligkeitsamplitudenbildes. Hierzu wird bevorzugt ein Filtern der Spektrenwerte bei einer Filterfrequenz oder wie zuvor beschrieben bevorzugt im Bereich einer Filterfrequenz vorgenommen. Wie ebenfalls zuvor beschrieben ist es insbesondere vorteilhaft, eine Liste von Filterfrequenzen, insbesondere bevorzugt eine Liste von Filterfrequenzbereichen vorzugeben, wobei für jeden Eintrag der Liste eine Filterung erfolgt und die Ergebnisse vereint werden, beispielsweise durch Addition. Zum Erzeugen des Helligkeitsamplitudenbildes erfolgt eine Filterung mittels einer oder mehrerer Filterfrequenzen für jedes Spektrum. Jede Filterung ergibt für jedes Spektrum einen Real- und Imaginäranteil des Frequenzsignals. Der Betrag dieser komplexen Zahl wird zur Helligkeitsamplitude für dieses mit dieser Frequenz gefilterte Spektrum zusammengefasst.

Bei Filtern des Spektrums mit mehreren Frequenzen, insbesondere bevorzugt einer Ausgangsfrequenz und dem Doppelten der Ausgangsfrequenz, werden bevorzugt die bei jeder Filterung ermittelten Helligkeitsamplituden addiert.

Im Ergebnis erhält man ein Helligkeitsamplitudenbild, welches für jeden Ort des Spektrums auf der Kalibrierfläche eine wie zuvor beschrieben ermittelte Helligkeitsamplitude aufweist.

Die Zuordnung einer Spektren-Untermenge zu den Reflektoren abhängig von dem Bewegungsmuster-Parameter des Reflektors erfolgt bevorzugt anhand eines Helligkeitsamplitudenbildes wie zuvor beschrieben.

In einer vorteilhaften Ausgestaltung der erfindungsgemäßen Kalibrierungsvorrichtung weist die Kalibrierfläche eine diffus reflektierende Fläche auf. Hierdurch ergibt sich der Vorteil, dass auch aus einem Kamerablickwinkel, welcher nicht der Position der Reflektoren entspricht, zumindest im Bereich der diffus reflektierenden Fläche eine ausreichende Intensität in Richtung der Kamera gestreut wird, die eine Messung ermöglicht. Wie zuvor ausgeführt, überdeckt die Kalibrierfläche bevorzugt den Rand einer energetischen Apertur des Strahlungsempfängers für die Sonnenstrahlung, insbesondere bevorzugt überdeckt die Kalibrierfläche diesen Rand umlaufend. Besonders vorteilhaft ist es, dass die Kalibrierfläche einen Rahmen um die energetische Apertur bildet. Diese vorteilhafte Ausgestaltung wird bevorzugt bei Linearkollektoren verwendet, insbesondere bei Linearkollektoren, bei denen die Sonnenstrahlung über einen (zu kalibrierenden) Primärreflektor und einen (typischerweise unbeweglichen) Sekundärreflektor auf den Linearempfänger reflektiert werden. Hier wird die diffus reflektierende Fläche bevorzugt an oder innerhalb der Fläche der Sekundärreflektorapertur ausgebildet.

Vorteilhafterweise umfasst die Vorrichtung mehrere Kameras, welche in unterschiedlichen Aufnahmewinkeln zur Kalibrierfläche angeordnet sind. Dies ist insbesondere vorteilhaft bei nicht ebenen Kalibrierflächen, beispielsweise Kalibrierflächen, welche eine nicht ebene Empfängerfläche eines Strahlungsempfängers überdecken, wie beispielsweise die Empfängerfläche eines zylindrischen Empfängers. Vorteilhafterweise ist die Kalibriervorrichtung ausgebildet, zur Aufnahme von Bildpunktreihen für eine Mehrzahl ortsverschiedener Ortspunkte der Kalibrierfläche mittels der Kameras, wobei jede Bildpunkreihe mindestens fünf zeitlich versetzte Bildpunktaufnahmen aufweist.

Die Bildpunktreihen weisen bevorzugt gleiche zeitliche Abstände auf, d. h. die Bildpunktreihen sind bevorzugt zeitlich äquidistant.

Weitere vorteilhafte Ausführungsformen des erfindungsgemäßen Verfahrens und der erfindungsgemäßen Vorrichtung werden nachfolgend anhand der Figuren und anhand von Ausführungsbeispielen beschrieben. Dabei zeigt:
- Figur 1: ein erstes Ausführungsbeispiel einer erfindungsgemäßen Vorrichtung;
- Figur 2: schematische Darstellungen einer Kalibrierfläche zur Erläuterung der Bewegungsmuster-Parameter Frequenz und Amplitude;
- Figur 3: Darstellungen zum Erläutern des Bewegungsmuster-Parameters Phasenlage;
- Figur 4: schematische Darstellungen zur Erläuterung des Bewegungsmuster-Parameters Bahnkurve;
- Figur 5: ein zweites Ausführungsbeispiel einer erfindungsgemäßen Vorrichtung mit einem zylindrischen Strahlungsempfänger;
- Figur 6: ein drittes Ausführungsbeispiel einer erfindungsgemäßen Vorrichtung, welche als Linear-Kollektor ausgebildet ist und
- Figur 7: schematische Darstellungen der Kalibrierfläche gemäß Figur 6.

Sämtliche Figuren sind schematische, nicht maßstabsgetreue Darstellungen. Gleiche Bezugszeichen in den Figuren bezeichnen gleiche oder gleichwirkende Elemente.

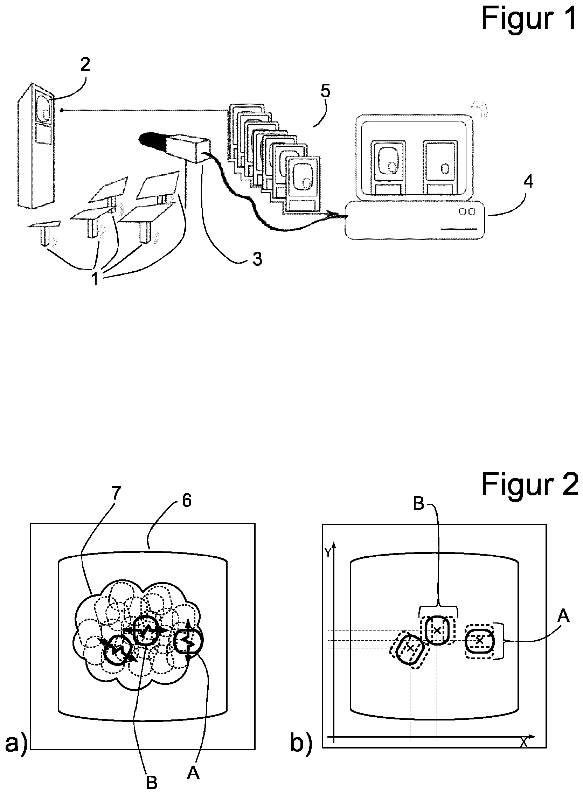

Figur 1 zeigt ein erstes Ausführungsbeispiel einer erfindungsgemäßen Kalibrierungsvorrichtung. Die Kalibrierungsvorrichtung umfasst eine Gruppe von Reflektoren 1, welche mittels motorischer Mittel zweiachsig schwenkbar auf Pylonen gelagert sind. Die Reflektoren 1 sind als Heliostaten ausgebildet. Die Vorrichtung umfasst weiterhin einen Strahlungsempfänger 2, welcher auf einem Turm angeordnet ist und eine rechteckige Strahlungs-Apertur aufweist. Der Strahlungsempfänger weist innerhalb der rechteckigen Strahlungsapertur ein die Strahlungsapertur vollständig ausfüllenden Absorber auf, dessen Absorberfläche thermisch leitend mit Leitungen für ein Wärmetransportfluid verbunden ist.

Mittels des Wärmetransportfluids wird die durch Konzentration von Sonnenlicht mittels der Reflektoren 1 auf dem Strahlungsempfänger 2 erzielte Wärme zur weiteren Verwendung abgeleitet, vorliegend in einen energetischen Kreisprozess zur Stromgewinnung. Die Kalibrierungsvorrichtung weist weiterhin eine Kamera 3 auf, welche vorliegend als Digital-Kamera zur ortsaufgelösten Aufnahme von Messbildern der Kalibrierfläche, welche die Absorberfläche des Strahlungsempfängers 2 vollständig überdeckt, ausgebildet ist. Die Kamera 3 weist eine Auflösung von 2048x2048 Pixeln auf.

Weiterhin weist die Kalibrierungsvorrichtung eine Kalibrierungseinheit 4 auf, welche vorliegend als Computer ausgebildet ist. Die Kalibrierungseinheit 4 ist über ein Datenkabel mit der Kamera 3 verbunden, um einerseits die Aufnahmen der Kamera 3 zu steuern und andererseits die Messbilder der Kamera 3 zu empfangen.

Weiterhin ist die Kalibrierungseinheit 4 über Funk mit den motorischen Mitteln zur Positionierung der Reflektoren 1 verbunden.

Die Kalibrierungseinheit 4 ist ausgebildet, einerseits als Nachführungseinheit die Reflektoren 1 einem sich ändernden Sonnenstand nachzuführen, so dass stets und unabhängig vom Sonnenstand eine Konzentration des Sonnenlichts auf dem Strahlungsempfänger 2 erfolgt. Andererseits ist die Kalibrierungseinheit 4 ausgebildet, folgende Verfahrensschritte auszubilden:
Gemäß Verfahrensschritt A erfolgt ein Ausrichten der Reflektoren 1 durch die vorgenannten motorischen Mittel, um die Kalibrierfläche, welche vorliegend identisch mit der Absorberfläche des Strahlungsempfängers 2 ist, mit von den Reflektoren reflektierter Sonnenstrahlung zu beaufschlagen.

In einem Verfahrensschritt B wird mittels der Kalibrierungseinheit 4 eine Änderung der Intensitätsverteilung der auf der Kalibrierfläche auftreffenden Strahlung mittels Ausführung eines Bewegungsmusters durch jeden Reflektor 1 erzeugt. Hierbei wird das Bewegungsmuster jedes Reflektors durch die Kalibrierungseinheit 4 mittels Steuersignalen an die motorischen Mittel der Reflektoren 1 vorgegeben und das Bewegungsmuster jedes Reflektors unterscheidet sich in mindestens einem durch die Kalibriervorrichtung vorgegebenen Bewegungsmuster-Parameter aus der Gruppe Frequenz der Bewegung, Amplitude der Bewegung, Phasenlage der Bewegung, Bahnkurve der durch den Reflektor reflektierten Sonnenstrahlung innerhalb der Kalibrierfläche.

Mittels der Kamera 3 erfolgt ein Aufnehmen von Bildpunkten für eine Mehrzahl ortsverschiedener Ortspunkte der Kalibrierfläche, vorliegend mit einer Abtastrate von 25 Hz. Jede Bildpunktreihe wird über eine Zeitdauer von 5,12s aufgenommen, so dass jede Bildpunktreihe etwa 128 Bildpunktaufnahmen aufweist. Schematisch ist das Ergebnis als Messbildreihe 5 dargestellt, welche mehrere zeitlich versetzte Aufnahmen des Kalibrierfeldes mittels der Kamera 3 schematisiert räumlich hintereinanderliegend zeigt.

Für jeden Bildpunkt jedes Messbildes liegt somit eine Bildpunktreihe vor, welche aus den zeitlich versetzten Aufnahmen dieses Bildpunktes besteht. Alle Bildpunkte zu einem gegebenen Zeitpunkt ergeben ein Messbild und alle Bildpunktreihen ergeben gemeinsam die Messbildreihe 5.

In einem Verfahrensschritt D erfolgt ein Ermitteln eines Spektrums für jede Bildpunktreihe mittels Transformation der Bildpunktreihe in den Frequenzraum, vorliegend mittels diskreter Fouriertransformation durch die Kalibrierungseinheit 4.

In einem Verfahrensschritt E erfolgt ein Zuordnen einer Spektren-Untermenge zu den Reflektoren abhängig von dem Bewegungsmuster-Parameter des Reflektors und in einem Verfahrensschritt F erfolgt ein Bestimmen einer oder mehrerer Reflektion-Zielposition für jeden Reflektor abhängig von zumindest der dem Reflektor zugeordneten Spektren-Untermenge. Die Reflektion-Zielpositionen werden mit den vorgegebenen Soll-Positionen für jeden Reflektor 1 verglichen und aus einer etwaigen Ortsdifferenz dieser Positionen wird eine Abweichung zur Korrektur der Ansteuerung der Reflektoren durch die Kalibrierungseinheit 4 ermittelt. All diese Schritte erfolgen ebenfalls mittels der Kalibrierungseinheit 4.

Nachfolgend wird anhand von Ausführungsformen und Ausführungsbeispielen des erfindungsgemäßen Verfahrens die Verwendung der zuvor genannten Bewegungsmuster-Parameter näher erläutert. Die Erläuterungen erfolgen beispielhaft an dem in Figur 1 dargestellten Ausführungsbeispiel einer erfindungsgemäßen Vorrichtung:
Vorteilhafterweise wird bei dem erfindungsgemäßen Verfahren für jeden Reflektor eine unterschiedliche Frequenz als Bewegungsmuster-Parameter vorgegeben und jedem Reflektor wird eine Spektren-Untermenge zugeordnet, welche zumindest die Spektren derjenigen Frequenz umfasst, welche dem Bewegungsmuster-Parameter des Reflektors entsprechen. Vorteilhafterweise werden jedem Reflektor die Spektren zugeordnet, welche das Spektrum derjenigen Frequenz umfassen, welche den Bewegungsmuster-Parameter des Reflektors entspricht oder jedem Reflektor wird eine Spektren-Untermenge zugeordnet, welche die Spektren derjenigen Frequenz umfassen, welche dem Bewegungsmuster-Parameter des Reflektors entsprechen. Insbesondere wird bevorzugt jedem Reflektor eine Spektren-Untermenge zugeordnet, welche die Spektren derjenigen Frequenz umfassen, welche dem Bewegungsmuster-Parameter des Reflektors entsprechen und die Spektren zumindest eine ganzzeiligen Vielfachen Frequenz derjenigen Frequenz umfassen, welche den Bewegungsmuster-Parameter des Reflektors entsprechen, insbesondere der doppelten Frequenz.

Bevorzugt erfolgt die Zuordnung der Spektren hierbei durch Filterung, indem mit der oder den vorgenannten Frequenzen eine Filterung aller Spektren durchgeführt wird. Anschließend erfolgt eine Auswahl der gefilterten Spektren anhand eines Auswahlkriteriums. Dies kann die Vorgabe eines Grenzwerts sein, wobei nur solche Spektren mit einem Wert größer des vorgegebenen Grenzwerts ausgewählt werden. Die ausgewählten Spektren werden dem Reflektor zugeordnet. Es erfolgte somit eine Zuordnung derart, dass mit der Frequenz der Bewegung als Bewegungsmuster-Parameter (gegebenenfalls in erweiterter Form als Frequenzbereich aufgrund von Unschärfen und gegebenenfalls zusätzlich bei ganzzahligen Vielfachen dieser Frequenz, insbesondere der doppelten Frequenz) eine Filterung sämtlicher Spektren vorgenommen wird, welche Filterung somit spezifisch für die individuelle Frequenz des Reflektors als Bewegungsmuster-Parameter ist. Über ein Auswahlkriterium wird eine Untermenge der gefilterten Spektren gebildet. Dies erfolgt bevorzugt, indem für das gefilterte Spektrum eine Helligkeitsamplitude gebildet wird, insbesondere durch Zusammenfassen des Real- und Imaginärteils des Frequenzsignals des gefilterten Spektrums. Als Auswahlkriterium kann somit bevorzugt ein Grenzwert für die Helligkeitsamplitude vorgegeben werden, so dass nur solche Spektren diesem Reflektor zugeordnet werden, deren Helligkeitsamplitude größer als der vorgegebene Grenzwert ist.

Nach Durchführen dieser Schritte filtern (zum Erstellen des Helligkeitsamplitudenbildes) und Zuordnen einer Spektren-Untermenge abhängig von einem Kriterium, insbesondere eines Grenzwertes für die Helligkeitsamplitude für jeden Reflektor sind den Reflektoren somit - aufgrund der unterschiedlichen Frequenzen als Bewegungsmuster-Parameter - typischerweise unterschiedliche Spektren-Untermengen zugeordnet.

Die jedem Reflektor zugeordnete Spektren-Untermenge lässt sich als Helligkeitsamplitudenbild darstellen, indem am Ort jedes Spektrums, d. h. an dem Ort auf der Kalibrierfläche, an welchem die Bildpunktreihe für dieses Spektrum aufgenommen wurde, ein signifikanter Wert -wie beispielsweise 1- eingetragen wird, wohingegen an den Orten derjenigen Spektren, welche nicht das Auswahlkriterium erfüllen, ein hiervon abweichender Wert -wie beispielsweise 0- eingetragen wird. Aus den sich hierdurch ergebenden Flächen (welche durch die mit 1 bezifferten Werte gebildet werden) lässt sich beispielsweise mittels Flächenschwerpunktbildung eine mittlere Position der aufgeprägten periodischen Bewegung jedes Reflektors bestimmen. Diese mittlere Position stellt somit eine Reflektion-Zielposition dar, welche für jeden Reflektor ermittelt wurde.

Diese Reflektion-Zielposition kann für jeden Reflektor mit der Reflektion-Sollposition verglichen werden, d. h. demjenigen Ortspunkt auf der Kalibrierfläche, welcher dem Flächenschwerpunkt gemäß der vorliegenden Auswertung anhand der durch die Kalibriervorrichtung vorgegebenen Bewegungspositionen entspricht. Ein Vergleich der Reflektions-Sollposition und Reflektions-Zielposition ermöglicht die Bestimmung einer Abweichung, welcher zur Korrektur der Ansteuerung verwendet wird.

Ein Ausführungsbeispiel eines erfindungsgemäßen Verfahrens, bei welchem sich die Bewegungsmuster der Reflektoren durch den Bewegungsmuster-Parameter Frequenz unterscheiden, wird anhand den in Figur 2 dargestellten schematischen Darstellungen erläutert. Figur 2 zeigt in Teilbild a) die schematische Darstellung der Kalibrierfläche 6. Auf dieser findet sich eine wolkenartig umrandete Überlagerung 7 der Sonnenlichtreflektionen der einzelnen Reflektoren 1. Zur besseren Übersichtlichkeit sind lediglich einzelne Reflektionen gestrichelt umrandet dargestellt. In diesem Ausführungsbeispiel werden den Reflektoren 1 gleichzeitig mittels der Kalibrierungseinheit 3 periodische Bewegungen aufgeprägt, welche eine identische Amplitude und Phasenlage der Bewegung, jedoch unterschiedliche Frequenzen aufweisen. Beispielhaft bewegt sich aufgrund dieser aufgeprägten Bewegung die Reflektion A eines ersten Reflektors 1 auf der Kalibrierfläche 6 entlang der Pfeilspitzen nach oben und unten mit einer vorgegebenen Frequenz fA. Entsprechend bewegt sich die Reflektion B eines zweiten Reflektors 1 auf der Kalibrierfläche 6 entlang der Pfeilspitzen nach rechts und links mit einer vorgegebenen Frequenz fB, welche zu fA unterschiedlich ist. Phase und Amplitude beider Bewegungen sind gleich.

Mittels der Kamera 3 wird nun eine Messbildreihe 5 aufgenommen, welche somit eine Vielzahl von Bildpunktreihen ergibt. Jede Bildpunktreihe wird mittels diskreter Fouriertransformation in den Frequenzraum transformiert, so dass sich für jede Bildpunktreihe ein Spektrum ergibt. Jedes Spektrum wird nun in einem ersten Schritt mit der Frequenz fA gefiltert, so dass lediglich diejenigen Anteile des Spektrums verbleiben, welcher den Bewegungsmuster-Parameter des ersten Reflektors entsprechen. Anschließend wird für diese mit der Frequenz fA gefilterten Spektren ein Helligkeitsamplitudenbild erzeugt. Jedes gefilterte Spektrum weist einen Real- und Imaginärteil des Frequenzsignals auf. Der Betrag dieser komplexen Zahl wird zur Helligkeitsamplitude für dieses Spektrum zusammengefasst.

Im Ergebnis ergibt sich somit ein Helligkeitsamplitudenbild, welches an Ort der Kalibrierfläche 6, an welchem eine Bildpunktreihe aufgenommen wurde, die wie zuvor beschrieben bestimmte Helligkeitsamplitude aufweist. Anschließend erfolgt das Erstellen eines Helligkeitamplitudenbildes, indem über einen vorgegebenen Grenzwert nur diejenigen Bildpunkte hell dargestellt werden, welche eine Helligkeitsamplitude größer des vorgegebenen Grenzwerts aufweisen. Alle anderen Punkte werden dunkel dargestellt. Der Grenzwert wird wie folgt ermittelt: Das Verhältnis von Signal zu Rauschen wird ermittelt, beispielsweise durch Vergleich mit Aufnahmereihen ohne periodische Bewegung oder durch Ermittlung des Signal-Rausch-Verhältnisses aus der Messreihe durch Methoden der Signalverarbeitung. Gegenüber dem Rauschniveau wird bevorzugt ein Sicherheitsabstand gewählt wie beispielsweise nochmals der Betrag des Rauschniveaus. Das Rauschniveau und der Sicherheitsabstand werden addiert und als Grenzwert verwendet. Andere Verfahren zur Bestimmung einer Signalrelevanz, bekannt aus der Signalverarbeitung, können ebenfalls eingesetzt werden.

Die hell dargestellten Bildpunkte entsprechen somit der Zuordnung einer Spektren-Untermenge zu dem ersten Reflektor.

In Figur 2 sind gestrichelt die sich ergebenden Flächen dargestellt. Der Einfachheit halber sind alle zu den drei gesondert gekennzeichneten Reflektoren sich ergebenden hellen Flächen gestrichelt in einem Bild dargestellt. Wie sich beispielsweise an den beiden gestrichelten Flächen im Bereich der mit A gekennzeichneten Position erkennen lässt, stellen die gestrichelten Flächen die Endpunkte (Vertices) der aufgeprägten periodischen Bewegung dar. Über eine Flächenschwerpunktbildung lässt sich somit der mit "x" gekennzeichnete Ort ermitteln, welcher der mittleren Position der aufgeprägten Bewegung entspricht. Dies ist unabhängig von der Ausrichtung der Bewegung, wie beispielsweise das Ergebnis einer gleichartigen Analyse an der Position B für den zweiten Reflektor zeigt.

Die im Bereich A und im Bereich B mit "x" markierte Position stellt somit die Reflektion-Zielposition für den ersten und den zweiten Reflektor dar (welche vorliegend dem Bewegungsmittelpunkt entspricht). Die Reflektion-Sollposition ist ebenfalls bekannt, da die durch die Kalibrierungseinheit 4 vorgegebene Bewegung über Soll-Positionen vorgegeben wurde. Entsprechend kann auch in einfacher Weise der Soll-Bewegungsmittelpunkt anhand der Vorgabedaten als Reflektions-Sollposition errechnet werden oder die Reflektions-Sollposition liegt direkt als Eingabeparameter vor.

Ein Vergleich dieser beiden Positionen ergibt wie zuvor beschrieben die Abweichung für den jeweiligen Reflektor.

In einer weiteren vorteilhaften Ausführungsform des erfindungsgemäßen Verfahrens wird für jeden Reflektor eine unterschiedliche Amplitude als Bewegungsmuster-Parameter vorgegeben. Für die Spektren zumindest einer Spektren-Auswahl aus den Spektren wird eine Bewegungs-Amplitudenbestimmung durchgeführt und jedem Reflektor wird eine Spektrum-Untermenge aus der Spektren-Auswahl zugeordnet, die eine Bewegungs-Amplitude aufweist, welche dem Bewegungsmuster-Parameter Amplitude des Reflektors entspricht.

Es liegt im Rahmen der Erfindung, sämtliche Spektren zur Bewegungs-Amplitudenbestimmung zu verwenden. Vorteilhaft ist es jedoch, dass für jeden Reflektor eine Spektren-Auswahl bestimmt wird, welche zumindest das Spektrum mit der Frequenz der Bewegung des Reflektors umfasst. In dieser vorteilhaften Ausführungsform erfolgt somit zunächst eine Eingrenzung der Spektren über die dem Bewegungsmuster des Reflektors zugrunde liegende Frequenz, so dass bereits Signalanteile, welche nicht durch die Bewegung dieses Reflektors initiiert sind, ausgeschlossen werden.

Ein Ausführungsbeispiel für eine solche bevorzugte Ausführungsform, bei welcher jedem Reflektor eine unterschiedliche Amplitude als Bewegungsmuster-Parameter vorgegeben wird, wird nachfolgend ebenfalls anhand von Figur 2 erläutert.

In diesem zweiten Ausführungsbeispiel erfolgt eine Aufprägung einer periodischen Bewegung im Wesentlichen wie bereits zuvor bei dem ersten Ausführungsbeispiel beschrieben. Jedoch erfolgt die periodische Bewegung aller Reflektoren in diesem Ausführungsbeispiel mit gleicher Frequenz, jedoch unterschiedliche Amplitude.

Auch in diesem zweiten Ausführungsbeispiel erfolgt eine Filterung der Spektren anhand der Anregungsfrequenz und Erstellen eines Helligkeitsamplitudenbildes durch Vorgabe eines Grenzwertes, welcher vorliegend wie bereits zuvor bei dem ersten Ausführungsbeispiel beschrieben mittels Analyse des Signal-Rausch-Verhältnisses ermittelt wird. Das Ergebnis entspricht der schematischen Darstellung gemäß Figur 2b), wobei jedoch im Bereich A zugeordneten gestrichelten Flächen einen anderen Abstand aufweisen, als die dem Bereich B zugeordneten gestrichelten Flächen. Denn wie zuvor ausgeführt stellen die gestrichelten Flächen die Endpunkte der periodischen Bewegung dar. Aufgrund der unterschiedlichen Amplituden liegen die Endpunkte der dem Reflektor 1 zugeordneten Flächen gemäß Bereich A somit in einem anderen Abstand zueinander gegenüber dem den zweiten Reflektor zugeordneten gestrichelten Flächen gemäß Bereich B.

Die Zuordnung dieser Flächen zu den einzelnen Reflektoren kann auf unterschiedliche Weise erfolgen: So kann eine Schwerpunktbildung der zusammenhängenden Flächen, d. h. aller in Figur 2 gestrichelt umrandet dargestellten Flächen erfolgen. Zwischen diesen Flächenschwerpunkten werden Abstände ermittelt und ein Vergleich dieser Abstände mit den vorgegebenen Amplituden ermöglicht eine Zuordnung von jeweils zwei einem Endpunkt entsprechenden Flächen zu einem Reflektor.

Ist die Zuordnung von jeweils zwei umrandet dargestellten Endpunktflächen zu jeweils einem Reflektor erfolgt, so kann wie im ersten Ausführungsbeispiel beschrieben durch Flächenschwerpunktbildung ein Bewegungsmittelpunkt ermittelt werden, welcher somit die Reflektions-Zielposition des jeweiligen Reflektors darstellt. Diese kann wie zuvor beschrieben mit einer Reflektion-Sollposition des jeweiligen Reflektors zum Ermitteln einer Abweichung verglichen werden.

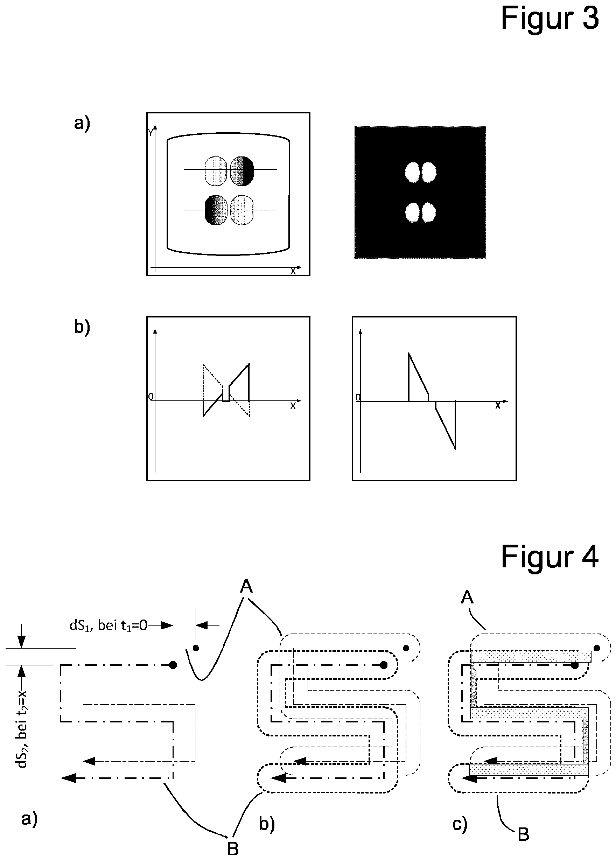

Ein weiteres Ausführungsbeispiel eines erfindungsgemäßen Verfahrens, bei welchem sich die Bewegungsmuster der Reflektoren durch den Bewegungsmuster-Parameter Phasenlage unterscheiden, wird anhand der in Figur 3 dargestellten Daten erläutert. Auch dieses Ausführungsbeispiel wird mit der in Figur 1 dargestellten Vorrichtung durchgeführt. Die Durchführung erfolgt ähnlich zu dem zuvor beschriebenen Ausführungsbeispiel, bei welchem sich die Bewegungsmuster der Reflektoren durch die Bewegungsmuster-Parameterfrequenz unterscheiden. Im Folgenden wird zur Vermeidung von Wiederholungen daher im Wesentlichen auf die Unterschiede eingegangen:
Auch bei diesem Ausführungsbeispiel wird allen Reflektoren der Gruppe von Reflektoren eine periodische Bewegung aufgeprägt, wie zu den Figuren 2a) und 2b) erläutert. In diesem Ausführungsbeispiel weisen jedoch die Bewegungen aller Reflektoren eine gleiche Frequenz und eine gleiche Amplitude auf. Für die Reflektoren ist jedoch eine unterschiedliche Anregungsphasenlage vorgegeben.

Das Durchführen der Verfahrensschritte A und B in diesem Ausführungsbeispielerfolgt somit im Wesentlichen wie zuvor beschrieben, mit der Ausnahme, dass Frequenz und Amplitude der Bewegung der Gruppe von Reflektoren gleich sind, jedoch sich die Phasenlagen der Bewegung der Reflektoren paarweise unterscheiden.

Die Aufnahme von Bildpunktreihen erfolgt ebenfalls wie zuvor zu Verfahrensschritt C beschrieben. Auch das Ermitteln eines Spektrums für jede Bildpunktreihe mittels Transformation der Bildpunktreihe in den Frequenzraum in einem Verfahrensschritt D erfolgt wie zuvor ausgeführt.

Zur Bereinigung der Datensätze von Fremdeinflüssen ist es vorteilhaft, die Spektren der Reflektoren hinsichtlich der vorgegebenen Anregungsfrequenz zu filtern, wie zuvor beschrieben. Im Unterschied zu der vorhergehend beschriebenen Filterung erfolgt in diesem Ausführungsbeispiel jedoch bei allen Reflektoren eine Filterung des Spektrums mit der identischen Frequenz, da in diesem Ausführungsbeispiel alle Reflektoren auch eine identische Anregungsfrequenz aufweisen. Die Filterung hinsichtlich der Anregungsfrequenz dient in diesem Ausführungsbeispiel somit nicht der Zuordnung der Spektren zu einzelnen Reflektoren, sondern der Bereinigung und Vereinfachung des Datensatzes zur weiteren Bearbeitung.

Nach Durchführung der Frequenzfilterung wird für jede Bildpunktreihe eine Phasenlage bestimmt. Dies erfolgt im vorliegenden Ausführungsbeispiel wie folgt: Durch die zuvor beschriebene Fourier-Transformation wird für jede Bildpunktreihe ein Real- und ein Imaginäranteil erhalten. Von dem Imaginärteil wird nur die positive oder nur die negative Hälfte in die Auswertung einbezogen, vorliegend die positive Hälfte. Im Realteil werden hingegen beide, sowohl die positive, als auch die negative Ausprägung der Frequenzen verwendet. Die inverse Transformation dieser Daten ergibt den Helligkeitsverlauf für jede Bildpunktreihe mit halbierter Amplitude, wobei der Helligkeitsverlauf als komplexe Zahl vorliegt. Hieraus wird für jede Bildpunktreihe eine Phasenlage gebildet: Dies kann durch den Arcustangens des Quotienten der komplexen Zahlenfolge der Bildpunktreihen erfolgen. Durch Beachtung der Vorzeichen von Real- und Imaginärteil wird die Phase im Bereich ±π ermittelt.

Im Ergebnis liegt für jede Bildpunktreihe eine Phasenlage vor.

Weiterhin wird ein Helligkeitsamplitudenbild bestimmt, wie zuvor beschrieben.

Aus den Phasenlagenwerten und dem Helligkeitsamplitudenbild wird ein Phasenlagenbild erzeugt. Dies kann dadurch erfolgen, dass für jede Bildpunktreihe ein bestimmter Aufnahmepunkt ausgewählt wird. Vorliegend wird der Zeitpunkt der ersten Aufnahme gewählt. Im Ergebnis liegt ein Phasenlagenbild vor. Dieses Phasenlagenbild wird weiter gefiltert, vorliegend durch Multiplikation mit dem Helligkeitsamplitudenbild.

Im Ergebnis wurde ein Phasenlagenbild erstellt, welches lediglich die Phasenverläufe der ausschlaggebenden Punkte aufweist, vorliegend die Phasenverläufe der Vertices der periodischen Bewegungen.

In Figur 3 sind beispielhaft Ergebnisse der Auswertung dargestellt, wobei zwei sich nicht überschneidende Bewegungen, welche um 0,25 Perioden verschoben sind, zugrunde gelegt wurden. In diesem Beispiel hat somit die eine Bewegung einen Phasenwinkel von 1 π gegenüber der anderen Bewegung (beispielsweise Bewegungen A und B gemäß Figur 2a).

In Teilbild b ist rechts ein Schnitt durch die beiden Phasenverläufe zur Verdeutlichung des Werteverlaufs dargestellt, wobei die Kurve mit dem größeren Maximum vorliegend der Bewegung A und mit dem geringeren Maximum der Bewegung B zugeordnet ist. Die Werte befinden sich im Bereich -π bis π, entsprechend der Phase des sinosoidal transformierten Helligkeitsverlaufs.

Im rechten Teilbild der Figur 3b) ist die Differenz dieser beiden Schnitte dargestellt.

In einem Verfahrensschritt E erfolgt nun eine Zuordnung einer Spektren-Untermenge zu den Reflektoren, vorliegend abhängig von dem Bewegungsmuster-Parameter Phase wie folgt:
Im Helligkeitsamplitudenbild werden durch Flächenbildung zusammenhängende Bereiche um die Vertexpositionen definiert. Hier kann somit wie zuvor beschrieben mittels Grenzwertbildung eine Flächenzuordnung erfolgen, wie beispielsweise die beiden weißen Flächen im Helligkeitsamplitudenbild gemäß Figur 3a), rechts. In einer vorteilhaften Weiterbildung des Ausführungsbeispiels kann bei der zusätzlichen Betrachtung von Vielfachen der Anregungsfrequenz - wie zuvor beschrieben - die gesamte Überdeckungsfläche der Bewegung verwendet werden.

Der Verlauf der Phasenlage in den zusammenhängenden Bereichen unterscheidet sich nach Phasenversatz. Bei Überlappung der Bewegungen bildet sich ein gemeinsamer Phasenverlauf aus.

Die Phasenverläufe werden mit der vorgegebenen Anregungsphasenlage jedes Reflektors korreliert, so dass ein Phasenverlauf jeweils einem Reflektor zugeordnet werden kann.

In dem in Figur 3 dargestellten Beispiel geschieht dies wie folgt: Das Phasenbild in Teilbild a), links (zur besseren Darstellbarkeit sind die Phasenwerte lediglich in den umrandeten Flächen einmal in Punktdichtendarstellung und einmal als Höhenlinien dargestellt) wird diskret differenziert. Hierdurch werden die Steigungsrichtung und der Steigungsbetrag des Phasenverlaufs ermittelt. Zusammenhängende Phasenverläufe aus teilweise abgegrenzten Flächen (die zusammengehörigen Flächen um die Vertices) werden durch die Einschränkung des Wertebereichs des diskret differenzierten Phasenbildes identifiziert. Da der Phasenverlauf stetig erfolgt, bleibt der Wertebereich des Differenzials ebenfalls stetig. In Teilbild b) links wird jeweils ein Schnitt durch den Phasenverlauf der beiden auftretenden Bewegungsmuster dargestellt: Die gepunktete Linie zeigt den Schnitt entlang der gepunkteten Linie in Teilbild a) links, die durchgezogene Linie den Schnitt entlang der durchgezogenen Linie in Teilbild a) links. Ein Phasenverlauf (gepunktete Linie) zeigt hierbei eine negative Steigung. Das Differentialbild zeigt daher für dieses Bewegungsmuster negative Werte. Der zweite Schnitt (durchgezogene Linie) zeigt eine positive Steigung. Entsprechend zeigt das Differential hierfür positive Werte. In diesem Fall erfolgt daher die Zuordnung der Zusammengehörigkeit der Flächen lediglich durch die Unterscheidung positiv/negativ.

In einer alternativen Ausführungsform können auch lediglich die Verhältnisse oder Differenzen der Phasenverläufe unterschiedlicher Bereiche mit den Verhältnissen der vorgegebenen Phasen verglichen werden, um eine Zuordnung durchzuführen. Hierzu ist in Teilbild b) der Figur 3 rechts eine solche Differenz zwischen der gepunkteten und der durchgezogenen Linie des rechten Bildes dargestellt.

Aus diesen identifizierten zusammengehörigen Flächen wird analog zur vorigen Beschreibung der Reflektorzielpunkt als Mittlerer Schwerpunkt der Flächen gebildet. Die Zuordnung des Reflektorzielpunkts zu den Reflektoren wird anhand des Phasenverlaufs um die Reflektorzielpunkte ermittelt: Die Phasenlage um den Reflektorzielpunkt, sowie an den Vertices wird aus den Eingabeparameter bestimmt. Die Phasenlage aus dem Phasenbild an diesen Positionen wird mit den bekannten Referenzen korreliert und somit die Zuordnung der unterschiedlichen Reflektorzielpunkte zu den Reflektoren erreicht.

Anhand der Darstellungen gemäß Figur 4 wird nachfolgend ein weiteres Ausführungsbeispiel eines erfindungsgemäßen Verfahrens erläutert, bei welchem sich die Bewegungsmuster-Parameter der Reflektoren in der Bahnkurve der durch den Reflektor reflektierten Sonnenstrahlung innerhalb der Kalibrierfläche unterscheiden.

Wie in Figur 4 in Teilbild a) beispielhaft dargestellt, sind für einen Reflektor A und B jeweils S-förmige Bahnkurven vorgegeben, so dass sich die Reflektor-Sollpositionen der Reflektoren in der Kalibrierfläche gemäß der in Figur 4a) dargestellten Linien bewegen. Die vorgegebenen Bahnkurven weisen somit einen Versatz dS₁ in X-Richtung und dS₂ in Y-Richtung auf. Die Bahnkurven sind in ihrer flächigen Ausprägung derart gewählt, dass sich die Bahnkurven der beiden Reflektor-Abbilder überschneiden, wie in Figur 4-b dargestellt. Die Geschwindigkeit ist derart gewählt, dass die Überschneidung innerhalb des gewählten Beobachtungszeitraumes, i.e. während der Aufnahme der Bildpunktreihen stattfindet.

Verfahrensschritte A und B werden somit wie zuvor beschrieben durchgeführt, wobei in Verfahrensschritt B unterschiedliche Bahnkurven der durch den Reflektor reflektierten Sonnenstrahlung innerhalb der Kalibrierfläche für jeden Reflektor der Gruppe von Reflektoren vorgegeben sind. Verfahrensschritt C zur Aufnahme von Bildpunktreihen erfolgt ebenfalls wie zuvor beschrieben.

Ebenso wird in Verfahrensschritt D für jede Bildpunktreihe ein Spektrum durch Transformation der Bildpunktreihen in den Frequenzraum wie zuvor beschrieben durchgeführt.

Aus den Spektren werden Helligkeitsamplitudenbilder wie zuvor beschrieben gebildet. Zur weiteren Analyse wird die Gesamtzahl der Helligkeitsamplitudenbilder, also über das gesamte Frequenzspektrum, verwendet.

Durch Flächenbildung und Bildverarbeitungsmethoden werden Überlagerungsformen in der Menge an Helligkeitsamplitudenbildern ermittelt, um Überschneidungen der Bewegungsmuster zu ermitteln. Dabei können beispielsweise folgende Zusammenhänge ausgenutzt werden:
Abhängig von den Startpositionen der Bewegungsmuster (d. h. den Startpositionen der Bahnkurven der durch den jeweiligen Reflektor reflektierten Sonnenstrahlung innerhalb der Kalibrierfläche) können für verschiedene Frequenzen bestimmte Überlagerungsformen in den einzelnen Helligkeitsamplitudenspektren auftreten. Die Frequenz, bei welcher eine solche Überlagerungsform auftritt, ist abhängig von den Faktoren Geschwindigkeit und Abstand der Bewegung der durch den jeweiligen Reflektor reflektierten Sonnenstrahlung innerhalb der Kalibrierfläche. Aufgrund der vorgegebenen Bewegung ist somit auch die Geschwindigkeit bekannt bzw. kann aus den Parametern der vorgegebenen Bewegung errechnet werden. Der Abstand lässt sich aus dem Auftreten der Überlagerungsformen bestimmen: Hierbei sagt eine Frequenz f an einer Bildreihe zugeordneten Ortspunkt innerhalb der Kalibrierfläche aus, wie groß der Abstand der Bewegungsverläufe der Abbilder ist. Für verschiedene Bewegungsrichtungen kann sich der Abstand unterscheiden, so dass der Abstand in zweidimensionaler Form bestimmt werden kann.

Über Lage, Form und Frequenz in der Bahnartefakte ermittelt wurden, wird die Reihenfolge der Überlagerung, das Ausmaß der Überlagerung und/oder der örtliche Verlauf der Überlagerung ermittelt. Anhand dieser und im Vergleich mit den vorgegebenen Bahnkurven wird das einzelne Bewegungsmuster jedes Reflektors nachvollzogen und daraus die Zielposition bestimmt.

Anschließend kann wie zuvor beschrieben durch einen Vergleich der Zielposition und der Sollposition eine etwaige Abweichung bestimmt werden.

In Figur 4 ist ein Beispiel zweier solcher versetzter Bahnkurven dargestellt: Wie bereits beschrieben, zeigt Teilbild 4a) den Versatz dS₁ in X-Richtung und dS₂ in Y-Richtung der beiden vorgegebenen Bahnkurven. Die Abbildung der durch die Reflektoren reflektierten Sonnenstrahlung ist jedoch nicht punktförmig sondern stellt eine Fläche dar, welche in etwa das Abbild der Reflektorfläche wiedergibt. Entsprechend weist auch die Bahnkurve innerhalb der Kalibrierfläche eine flächige Ausdehnung auf. Dies ist in Figur 4b) durch die gestrichelten Umrandungen der Bahnkurven dargestellt. Hieraus wird ersichtlich, dass teilweise eine Überlappung der Abbilder vorliegt. Diese Überlappungen sind in Figur 4 als gepunktete Bereiche gekennzeichnet.

Bei der in Figur 4 dargestellten Situation starten beide Bewegungen A und B zu einem Zeitpunkt t₁=0. Die Bahnkurve der Bewegung B ist in Laufrichtung (vorliegend waagrecht nach links gemäß der Darstellungen in Figur a) um dS₁ verschoben. Die Periodenweite der Schwingung der Helligkeitsperiode der auf der Kalibrierfläche, welche bei der Überlagerung der aufeinanderfolgenden Bahnkurven entsteht, entspricht somit dem Produkt aus dem Versatz dS₁ und der Geschwindigkeit, mit welcher sich die Abbilder beider Reflektoren bewegen (unter Annahme einer gemeinsamen Geschwindigkeit). Entsprechend ergibt sich die Frequenz der Helligkeitsänderung aus dem Kehrwert der Helligkeitsperiode. Über die Aufnahmefrequenz der Kamera kann dies in die Frequenz des aufgenommenen Datensatzes übersetzt werden.

Bei dem Wechsel der Bewegung in die vertikale Richtung verändert sich die auf der Kalibrierfläche erzeugte Helligkeitsperiode, wenn zwar die Geschwindigkeit gleich bleibt, aber sich der örtliche Versatz auf dS₂ ändert, welcher vorliegend unterschiedlich zu dS₁ ist. Diese Bereiche werden somit bei einer anderen Frequenz abgebildet. Die Überlagerung der ausgedehnten Abbilder und die Bereiche gleicher Frequenz sind wie zuvor beschrieben in Figur 4b) und Figur 4c) exemplarisch dargestellt.

Zur Darstellung der kompletten Bewegungsform wird somit in den verschiedenen Helligkeitsamplitudenbildern nach Artefakten der Gesamtform gesucht, wie in diesem Beispiel möglicherweise horizontale oder auch vertikale Linien, welche sich durch die Überlappungen ergeben. Zur Bestimmung der kompletten Bewegungsform können Werkzeuge aus der Bildverarbeitung, wie beispielsweise HOG-Transformationen (histogram of oriented gradients) oder Hough-Transformationen oder andere Erkennungsalgorithmen für Merkmale eingesetzt werden.

Die Zuordnung der in Figur 4 dargestellten Pfade zum jeweiligen Reflektor erfolgt durch die nochmalig Durchführung des Prozesses bei leichter Verschiebung des Startpunktes eines der Reflektoren. Mittels der erneut ermittelten Pfadverläufe wird der versetzte Reflektor ermittelt. Somit sind die Pfadverläufe beider Reflektor-Abbilder und deren momentane Position bekannt.

In einer alternativen Ausführungsform unterscheiden sich die Bewegungsgeschwindigkeiten einzelner Teilabschnitte der Bewegung eines Reflektors zum anderen. Hierdurch werden mehrere Versätze dSₓ verursacht. Entsprechend wird das Bewegungsmuster aus einer Vielzahl von Amplitudenbildern unterschiedlicher Frequenz gebildet. Die Veränderung der ermittelten Versätze dSₓ gibt an, welcher der beiden Pfade zu welchem Reflektor zugeordnet werden kann.

In einem alternativen Ausführungsbeispiel sind für die Bahnkurven der Reflektoren unterschiedliche Formen vorgegeben, bevorzugt unterschiedliche geschlossene Bahnkurven. In diesem Ausführungsbeispiel sind somit für jeden Reflektor aus der Gruppe der Reflektoren periodische Bewegungen vorgegeben, die sich jedoch hinsichtlich der Form der Bahnkurve unterscheiden. Beispielsweise kann für einen ersten Reflektor eine Bahnkurve A in Form eines Kreises und für einen zweiten Reflektor eine Bahnkurve B in Form eines Rechtecks vorgegeben werden. Bevorzugte Bahnkurven sind einfache, geschlossene geometrische Formen wie beispielsweise Kreis, Rechteck, Dreieck, Acht, Quadrat. In einer bevorzugten Weiterbildung wird die Frequenz des Amplitudenbildes anhand der Dauer der Bewegung (die Dauer einer Periode entspricht dem Kehrwert der Frequenz) gewählt. Es erfolgt in diesem Fall somit eine Filterung wie zuvor beschrieben anhand der vorgenannten Frequenz.

Die Durchführung des Verfahrens erfolgt hinsichtlich der Verfahrensschritte A bis C wie zuvor beschrieben, wobei jedoch in Verfahrensschritt B die Bahnkurven wie zuvor genannt vorgegeben werden.

Ebenfalls erfolgt in Verfahrensschritt D das Ermitteln eines Spektrums für jede Bildpunktreihe mittels Transformation der Bildpunktreihe in den Frequenzraum.

Die Zuordnung einer Spektren-Untermenge zu den Reflektoren abhängig vorliegend von dem Bewegungsmuster-Parameter Bahnkurve in einem Verfahrensschritt E erfolgt in diesem Ausführungsbeispiel mittels Bildverarbeitungstechniken. Dies kann beispielsweise mittels Hough-Transformation oder Merkmalsextraktion (Feature Extraction) erfolgen, in dem Helligkeitsamplitudenbilder wie zuvor beschrieben erstellt werden und in den Helligkeitsamplitudenbildern nach den vorgegebenen Anregungsbewegungsmustern (vorliegend Kreis und Rechteck) gesucht wird. Übereinstimmende Filterbewegungsmuster im Helligkeitsamplitudenbild werden dem entsprechenden Reflektor mit derart vorgegebener Bahnkurve zugeordnet.

In einem Verfahrensschritt F erfolgt die Bestimmung der Reflektor-Zielposition anhand der Bewegungsmusterposition auf der Kalibrierfläche. Dies erfolgt anhand der charakteristischen Merkmale der gewählten Bahnkurve. Beispielsweise sind dies für ein Rechteck die Ecken der geometrischen Form. Der Zeitpunkt, und entsprechend die Sollposition, an welcher das Reflektorabbild den charakteristischen Punkt durchläuft ist bekannt. Über den Unterschied der ermittelten Kurve gegenüber der Sollkurve werden die Korrekturparameter bestimmt. Charakteristische Punkte anderer Formen können beispielsweise Mittelpunkte (Kreis, Acht), Kreuzungspunkte (Acht), etc. sein.

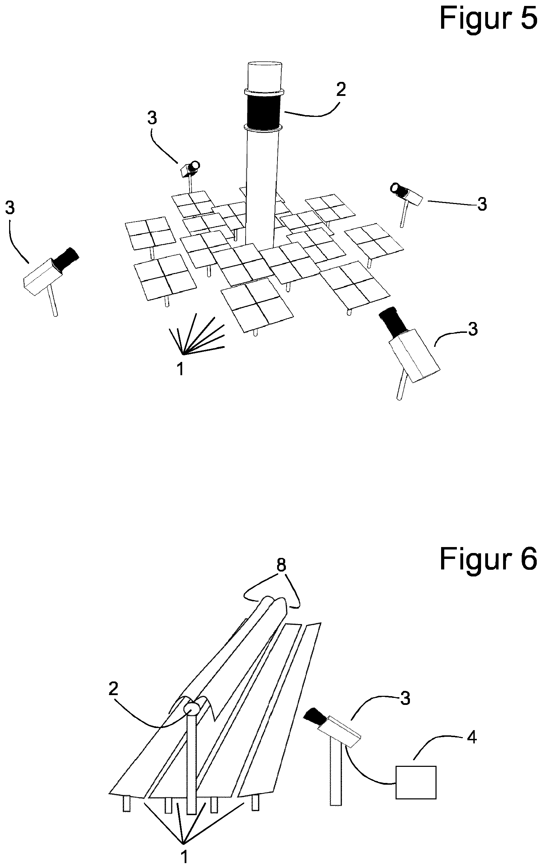

In Figur 5 ist ein zweites Ausführungsbeispiel einer erfindungsgemäßen Kalibrierungsvorrichtung dargestellt. In diesem Ausführungsbeispiel sind Reflektoren 1 ringförmig um einen zylindrisch ausgebildeten Strahlungsempfänger 2 angeordnet. Die energetische Apertur des Strahlungsempfängers 2 entspricht somit der Mantelfläche des zylindrisch ausgebildeten Strahlungsempfängers. Da die gesamte Mantelfläche nicht vollständig mittels einer Kamera erfasst werden kann, weist die Kalibrierungsvorrichtung gemäß des zweiten Ausführungsbeispiels 4 Kameras 3 auf, welche auf einer gemeinsamen Kreislinie, in welcher der Strahlungsempfänger 2 den Mittelpunkt bildet, gleich verteilt angeordnet sind. Durch Überlagerung der vier Kamerabilder kann somit ein gemeinsames Kamerabild der gesamten Mantelfläche des Strahlungsempfängers 2 erzeugt werden, welches zur Aufnahme der Bildpunktreihen dient.

Die Reflektoren 1 des zweiten Ausführungsbeispiels sind ebenfalls zweiachsig schwenkbar ausgebildet. Die Kalibrierungsvorrichtung des zweiten Ausführungsbeispiels weist analog zu der in Figur 1 dargestellten Kalibrierungsvorrichtung eine Kalibrierungseinheit auf, welche als Computer ausgebildet ist und sowohl mit den motorischen Antrieben der Reflektoren 1, als auch den vier Kameras verbunden ist.

In Figur 6 ist ein drittes Ausführungsbeispiel einer erfindungsgemäßen Kalibrierungsvorrichtung dargestellt. Diese Kalibrierungsvorrichtung ist als Linear-Kollektor ausgebildet und weist mehrere einachsig schwenkbare Reflektoren 1 auf. Mittels dieser Reflektoren 1 wird über zwei ortsfeste, unbewegliche Sekundärreflektoren 8 Sonnenlicht auf einen als Linearkollektor ausgebildeten Strahlungsempfänger 2 konzentriert. Der Strahlungsempfänger 2 ist ebenfalls von Wärmetransportfluid durchflossen, um die mittels des Sonnenlichts erzeugte Wärme an einen energetischen Prozess weiterzuleiten.

Auch die Kalibrierungsvorrichtung gemäß dem dritten Ausführungsbeispiels umfasst eine Kamera 3, welche mit einer Kalibrierungseinheit 4 verbunden ist. Die Kalibrierungseinheit 4 ist analog zu den zuvor beschriebenen Kalibrierungseinheiten ausgebildet und weist insbesondere ebenfalls die Funktion einer Nachführeinheit auf. Sie ist hierzu mittels Funkverbindung mit motorischen Antrieben der Reflektoren 1 verbunden. Ebenso kann die Verbindung mittels Kabeln erfolgen.

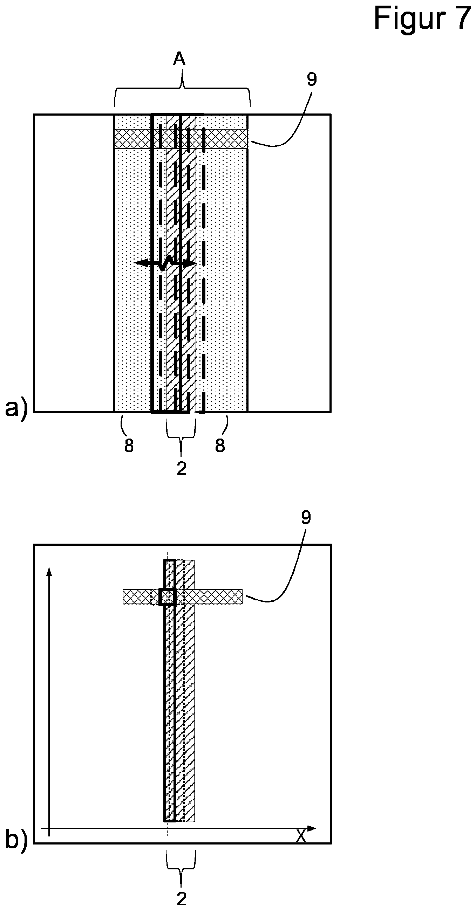

In Figur 7 sind schematische Darstellungen des Blickfeldes der Kamera 3 dargestellt:
Wie in Teilbild a) ersichtlich überdeckt das Blickfeld der Kamera 3 einen Bereich A, welcher den mittig liegenden als Linearkollektor ausgebildeten Strahlungsempfänger 2, als auch die umgebenden Sekundärreflektoren 8 abdeckt.

Aufgrund der gerichteten Reflektion der Sekundärreflektoren 8, welche zur Reflektion der mittels der Reflektoren 1 reflektierten Sonnenstrahlen auf den Strahlungsempfänger 2 ausgebildet ist, eignen sich die Sekundärreflektoren nicht als Hintergrund eines Messbildes für die Kamera 3. Aus diesem Grund weist die Kalibrierungsvorrichtung eine diffus reflektierende Fläche 9 auf, welche sich quer zur Erstreckungsrichtung des Strahlungsempfängers 2 erstreckt. Die diffus reflektierende Fläche 9 weist eine Breite von wenigen Zentimetern, vorliegend etwa 5 cm auf sowie ein Länge A von vorliegend 30 cm (welche der Aperturweite des Sekundärreflektors entspricht) auf und dient dazu, Strahlung auch außerhalb des Bereichs des Strahlungsempfängers 2 zumindest teilweise in Richtung der Kamera 3 zu streuen.

Eine Kalibrierung kann insbesondere mittels des als erstes Ausführungsbeispiel beschriebenen Verfahrens erfolgen:
Mittels der Kalibrierungseinheit 4 werden periodische Bewegungen auf die Reflektoren 1 aufgeprägt, welche gleiche Phase und gleiche Amplitude, jedoch unterschiedliche Frequenz aufweisen. In Figur 7 ist durch den dick umrandeten Bereich beispielhaft durch die Pfeile die periodische Bewegung eines Reflektors angedeutet. Der streifenartige Reflektionsbereich dieses Reflektors bewegt sich aufgrund der aufgeprägten Bewegung entlang der Pfeilspitzen nach rechts und links, d. h. die Bewegung erfolgt senkrecht zur länglichen Erstreckung des Strahlenempfängers 2. Diese Bewegung ist außerhalb der diffus reflektierenden Fläche 9 jedoch nur auf dem Strahlungsempfänger 2 mittels der Kamera detektierbar. Dies ist in Teilbild b) der Figur 7 schematisch dargestellt. Lediglich auf der diffus reflektierenden Fläche 9 kann die periodische Bewegung, welche auf den Reflektor aufgeprägt ist, vollständig detektiert werden.

Bevorzugt erfolgt daher die Auswertung lediglich derjenigen Bildpunktreihen, deren Ortspunkte auf der diffus reflektierenden Fläche 9 liegen.

Die Auswertung an sich erfolgt analog zu dem ersten beschriebenen Ausführungsbeispiel eines erfindungsgemäßen Verfahrens: Durch Filtern anhand der Anregungsfrequenz jedes Reflektors und Erstellen eines Helligkeitsamplitudenbildes für jeden Reflektor kann durch Schwerpunktbildung ein Bewegungsmittelpunkt bestimmt werden, der die Reflektor-Zielposition darstellt. Ein Vergleich mit der Reflektor-Sollposition ermöglicht das Ermitteln einer Abweichung.

## Patentansprüche

1. Kalibrierungsverfahren für eine Gruppe von Reflektoren (1) zur Konzentration von Sonnenstrahlung auf einen Strahlungsempfänger (2), folgende Verfahrensschritte umfassend,
A) Ausrichten der Reflektoren, um eine Kalibrierfläche (6) zumindest teilweise mit von den Reflektoren (1) reflektierter Sonnenstrahlung zu beaufschlagen;
B) Erzeugen einer Änderung der Intensitätsverteilung der auf die Kalibrierfläche (6) auftreffenden Strahlung mittels Ausführen eines Bewegungsmusters durch jeden Reflektor der Gruppe, wobei das Bewegungsmuster jedes Reflektors sich in mindestens einem vorgegebenen Bewegungsmuster-Parameter aus der Gruppe
- Frequenz der Bewegung,
- Amplitude der Bewegung,
- Phasenlage der Bewegung,
- Bahnkurve der durch den Reflektor reflektierten Sonnenstrahlung innerhalb der Kalibrierfläche,
von den Bewegungsmuster-Parametern der anderen Reflektoren (1) unterscheidet;
C) Aufnahme von Bildpunktreihen für eine Mehrzahl ortsverschiedener Ortspunkte der Kalibrierfläche (6) mittels zumindest einer Kamera (3), wobei jede Bildpunktreihe mindestens fünf zeitlich versetzte Bildpunktaufnahmen aufweist;
D) Ermitteln eines Spektrums für jede Bildpunktreihe mittels Transformation der Bildpunktreihe in den Frequenzraum;
E) Zuordnung einer Spektren-Untermenge zu den Reflektoren (1) abhängig von dem Bewegungsmuster-Parameter des Reflektors;
F) Bestimmen zumindest einer Reflektion-Zielposition für jeden Reflektor abhängig von zumindest der dem Reflektor zugeordneten Spektren-Untermenge.

2. Verfahren nach Anspruch 1,
**dadurch gekennzeichnet,**
**dass** eine Filterung der Spektren erfolgt, bevorzugt eine Filterung auf eine oder mehrere vorgegebene Frequenzen, insbesondere, dass die Filterung in einem Verfahrensschritt D1 zwischen Verfahrensschritt D und E erfolgt.

3. Verfahren nach einem der vorangegangenen Ansprüche,
**dadurch gekennzeichnet,**
**dass** jeder der Reflektoren (1) periodisch bewegt wird, um eine periodische Änderung der Intensitätsverteilung der Kalibrierfläche (6) zu erzielen, insbesondere, dass gleichzeitig jeder der Reflektoren (1) periodisch bewegt wird,
vorzugsweise, dass die durch die Bewegung der Reflektoren (1) erzielte periodische Änderung der Intensitätsverteilung der Kalibrierfläche (6) im Frequenzbereich 0,001 Hz bis 1 MHz, bevorzugt im Bereich 0,01 Hz bis 100 Hz, insbesondere im Bereich 0,1 Hz bis 10 Hz liegt.

4. Verfahren nach Anspruch 3,
**dadurch gekennzeichnet,**
**dass** jede Bildpunktreihe für mehrere Perioden der periodischen Änderung jeweils eine Mehrzahl von Aufnahmen aufweist, insbesondere zumindest fünf Aufnahmen, bevorzugt zumindest 10, insbesondere zumindest 50 Aufnahmen pro Periode.

5. Verfahren nach einem der vorangegangenen Ansprüche 3 bis 4,
**dadurch gekennzeichnet,**
**dass** für jeden Reflektor eine unterschiedliche Frequenz als Bewegungsmuster-Parameter vorgegeben wird und jedem Reflektor eine Spektren-Untermenge zugeordnet wird, welche zumindest die Spektren derjenigen Frequenz umfasst, welche dem Bewegungsmuster-Parameter des Reflektors entsprechen,
vorzugsweise, dass jedem Reflektor die Spektren zugeordnet werden,
welche das Spektrum derjenigen Frequenz umfassen, welche dem Bewegungsmuster-Parameter des Reflektors entspricht oder
**dass** jedem Reflektor eine Spektren-Untermenge zugeordnet wird, welche die Spektren derjenigen Frequenz umfassen, welche dem Bewegungsmuster-Parameter des Reflektors entsprechen und die Spektren zumindest einer ganzzahlig vielfachen Frequenz derjenigen Frequenz umfassen, welche dem Bewegungsmuster-Parameter des Reflektors entsprechen, insbesondere der doppelten Frequenz.

6. Verfahren nach einem der vorangegangenen Ansprüche 3 bis 5,
**dadurch gekennzeichnet,**
**dass** für jeden Reflektor eine unterschiedliche Amplitude als Bewegungsmuster-Parameter vorgegeben wird,
**dass** für die Spektren zumindest einer Spektren-Auswahl aus den Spektren eine Bewegungs-Amplitudenbestimmung durchgeführt wird und dass jedem Reflektor eine Spektren-Untermenge aus der Spektren-Auswahl zugeordnet wird, die eine Bewegungs-Amplitude aufweist, welche dem Bewegungsmuster-Parameter Amplitude des Reflektors entspricht,
insbesondere, dass für jeden Reflektor eine Spektren-Auswahl bestimmt wird, welche zumindest das Spektrum mit der Frequenz der Bewegung des Reflektors umfasst.

7. Verfahren nach einem der vorangegangenen Ansprüche 3 bis 6,
**dadurch gekennzeichnet,**
**dass** für jeden Reflektor eine unterschiedliche Phase als Bewegungsmuster-Parameter vorgegeben wird,
**dass** für die Spektren zumindest einer Spektren-Auswahl aus den Spektren jeweils eine Phase bestimmt wird und dass jedem Reflektor eine Spektren-Untermenge abhängig von dem Bewegungsmuster-Parameter Phase zugeordnet wird, insbesondere, dass für jeden Reflektor eine Spektren-Auswahl bestimmt wird, welche zumindest das Spektrum mit der Frequenz der Bewegung des Reflektors umfasst.

8. Verfahren nach einem der vorangegangenen Ansprüche 3 bis 7,
**dadurch gekennzeichnet,**
**dass** für jeden Reflektor eine unterschiedliche Bahnkurve als Bewegungsmuster-Parameter vorgegeben wird,
**dass** zumindest für die Spektren zumindest einer Spektren-Auswahl aus den Spektren mittels Bildverarbeitung jedem Reflektor eine Spektren-Untermenge abhängig von dem Bewegungsmuster-Parameter Bahnkurve zugeordnet wird,
**dass** für jedes Spektrum zumindest einer Spektren-Auswahl insbesondere, dass für jeden Reflektor eine Spektren-Auswahl bestimmt wird, welche zumindest das Spektrum mit der Frequenz der Bewegung des Reflektors umfasst.

9. Verfahren nach einem der vorangegangenen Ansprüche,
**dadurch gekennzeichnet,**
**dass** für jeden Reflektor eine unterschiedliche Bahnkurve der von dem Reflektor reflektierten Sonnenstrahlung innerhalb der Kalibrierfläche (6)als Bewegungsmuster-Parameter vorgegeben wird, wobei sich die vorgegebenen Bahnkurven zumindest an einem Punkt mit zumindest einer weiteren vorgegebenen Bahnkurve überschneiden und
**dass** abhängig von den Überlagerungspunkten der vorgegebenen Bahnkurven zumindest für die Spektren zumindest einer Spektren-Auswahl aus den Spektren mittels Bildverarbeitung jedem Reflektor eine Spektren-Untermenge zugeordnet wird.

10. Verfahren nach einem der vorangegangenen Ansprüche,
**dadurch gekennzeichnet,**
**dass** das Spektrum jeder Bildpunktreihe mittels Fouriertransformation erstellt wird, insbesondere mittels diskreter Fouriertransformation.

11. Verfahren nach einem der vorangegangenen Ansprüche,
**dadurch gekennzeichnet,**
**dass** die Kalibrierfläche (6) eine energetische Apertur des Strahlungsempfänger zumindest teilweise überdeckt, vorzugsweise vollständig überdeckt,
insbesondere,
**dass** die Kalibrierfläche (6) die energetische Apertur des Strahlungsempfänger (2) vollständig überdeckt.

12. Kalibrierungsvorrichtung für eine Gruppe von Reflektoren (1) zur Konzentration von Sonnenstrahlung auf einen Strahlungsempfänger (2), mit einer Gruppe von Reflektoren (1), mit motorischen Mitteln zur Positionierung jedes Reflektors, um Sonnenstrahlung auf einen Strahlungsempfänger (2) zu konzentrieren und mit zumindest einer Kamera und einer Kalibrierfläche, wobei die Kalibrierungsvorrichtung eine Kalibrierungseinheit (4) aufweist, welche mit den motorischen Mitteln und der Kamera (3) zusammenwirkend ausgebildet ist, zum
A) Ausrichten der Reflektoren (1) durch die motorischen Mittel, um die Kalibrierfläche (6) zumindest teilweise mit von den Reflektoren (1) reflektierter Sonnenstrahlung zu beaufschlagen;
B) Erzeugen einer Änderung der Intensitätsverteilung der auf die Kalibrierfläche (6) auftreffenden Strahlung mittels Ausführen eines Bewegungsmusters durch jeden Reflektor der Gruppe, wobei das Bewegungsmuster jedes Reflektors sich in mindestens einem durch die Kalibriervorrichtung vorgegebenen Bewegungsmuster-Parameter aus der Gruppe
- Frequenz der Bewegung,
- Amplitude der Bewegung,
- Phasenlage der Bewegung,
- Bahnkurve der durch den Reflektor reflektierten Sonnenstrahlung innerhalb der Kalibrierfläche,
von den Bewegungsmuster-Parametern der anderen Reflektoren (1) unterscheidet;
C) Aufnehmen von Bildpunktreihen für eine Mehrzahl ortsverschiedener Ortspunkte der Kalibrierfläche (6) mittels der Kamera (3), wobei jede Bildpunktreihe mindestens fünf zeitlich versetzte Bildpunktaufnahmen aufweist;
D) Ermitteln eines Spektrums für jede Bildpunktreihe mittels Transformation der Bildpunktreihe in den Frequenzraum;
E) Zuordnen einer Spektren-Untermenge zu den Reflektoren (1) abhängig von dem Bewegungsmuster-Parameter des Reflektors;
F) Bestimmen einer oder mehrerer Reflektion-Zielpositionen für jeden Reflektor abhängig von zumindest der dem Reflektor zugeordneten Spektren-Untermenge.

13. Vorrichtung nach Anspruch 12,
**dadurch gekennzeichnet,**
**dass** die Kalibrierfläche (6) eine diffus reflektierende Fläche (9) umfasst.

14. Vorrichtung nach einem der Ansprüche 12 bis 13,
**dadurch gekennzeichnet,**
**dass** die Kalibrierfläche (6) den Rand einer energetischen Apertur des Strahlungsempfängers für die Sonnenstrahlung überdeckt, bevorzugt den Rand umlaufend überdeckt, insbesondere, dass die Kalibrierfläche (6) einen Rahmen um die energetischen Apertur bildet.

15. Vorrichtung nach einem der Ansprüche 12 bis 14,
**dadurch gekennzeichnet,**
**dass** die Vorrichtung mehrere Kameras umfasst, welche in unterschiedlichen Aufnahmewinkeln zur Kalibrierfläche (6) angeordnet sind und
**dass** die Kalibriervorrichtung ausgebildet ist, zur Aufnahme von Bildpunktreihen für eine Mehrzahl ortsverschiedener Ortspunkte der Kalibrierfläche (6) mittels der Kameras, wobei jede Bildpunktreihe mindestens fünf zeitlich versetzte Bildpunktaufnahmen aufweist.

## Claims

1. Calibration method for a group of reflectors (1) for concentrating solar radiation onto a radiation receiver (2), comprising the following method steps:
A) aligning the reflectors so that a calibration surface (6) is at least partly acted upon by solar radiation reflected by the reflectors (1);
B) generating a change in the intensity distribution of the radiation incident on the calibration surface (6) by execution of a movement pattern by each reflector of the group, wherein the movement pattern of each reflector, in at least one specified movement pattern parameter from the group
- *frequency* of the movement,
- *amplitude* of the movement,
- *phase* position of the movement,
- *path* of the solar radiation reflected by the reflector within the calibration surface,
differs from the movement pattern parameters of the other reflectors (1);
C) recording series of image points for a plurality of location points at different locations on the calibration surface (6) by means of at least one camera (3), each image point series having at least five image point recordings staggered in time;
D) establishing a spectrum for each image point series by transformation of the image point series into the frequency domain;
E) assigning a sub-set of spectra to the reflectors (1) in dependence upon the movement pattern parameter of the reflector;
F) determining at least one reflection target position for each reflector in dependence upon at least the sub-set of spectra assigned to the reflector.

2. Method according to claim 1,
**characterised in that**
filtering of the spectra, preferably filtering in respect of one or more specified frequencies, is carried out; especially, the filtering is carried out in a method step D1 between method steps D and E.

3. Method according to either one of the preceding claims, **characterised in that**
each of the reflectors (1) is periodically moved in order to achieve a periodic change in the intensity distribution of the calibration surface (6); especially, each of the reflectors (1) is periodically moved at the same time;
preferably, the periodic change in the intensity distribution of the calibration surface (6) achieved by the movement of the reflectors (1) lies in the frequency range from 0.001 Hz to 1 MHz, preferably in the range from 0.01 Hz to 100 Hz, especially in the range from 0.1 Hz to 10 Hz.

4. Method according to claim 3,
**characterised in that**
each image point series has a respective plurality of recordings for a plurality of periods of the periodic change, especially at least five recordings, preferably at least 10, especially at least 50 recordings per period.

5. Method according to either one of preceding claims 3 and 4, **characterised in that**
for each reflector a different frequency is specified as movement pattern parameter, and each reflector is assigned a sub-set of spectra which comprises at least the spectra of that frequency that correspond to the movement pattern parameter of the reflector;
preferably, each reflector is assigned the spectra which comprise the spectrum of that frequency that corresponds to the movement pattern parameter of the reflector; or
each reflector is assigned a sub-set of spectra which comprise the spectra of that frequency that correspond to the movement pattern parameter of the reflector and comprise the spectra of at least a whole number multiple frequency of that frequency which correspond to the movement pattern parameter of the reflector, especially double the frequency.

6. Method according to any one of preceding claims 3 to 5, **characterised in that**
for each reflector a different amplitude is specified as movement pattern parameter;
a movement amplitude is determined for the spectra of at least one spectra selection from the spectra; and
each reflector is assigned a sub-set of spectra from the spectra selection, which sub-set has a movement amplitude that corresponds to the movement pattern parameter *amplitude* of the reflector; especially, for each reflector there is determined a spectra selection which comprises at least the spectrum with the frequency of the movement of the reflector.

7. Method according to any one of preceding claims 3 to 6, **characterised in that**
for each reflector a different phase is specified as movement pattern parameter;
a phase is determined for each of the spectra of at least one spectra selection from the spectra; and each reflector is assigned a sub-set of spectra in dependence upon the movement pattern parameter phase; especially, for each reflector there is determined a spectra selection which comprises at least the spectrum with the frequency of the movement of the reflector.

8. Method according to any one of preceding claims 3 to 7, **characterised in that**
for each reflector a different path is specified as movement pattern parameter;
at least for the spectra of at least one spectra selection from the spectra a sub-set of spectra is assigned to each reflector by means of image processing in dependence upon the movement pattern parameter *path*; for each spectrum of at least one spectra selection, especially for each reflector there is determined a spectra selection which comprises at least the spectrum with the frequency of the movement of the reflector.

9. Method according to any one of the preceding claims,
**characterised in that**
for each reflector a different path of the solar radiation reflected by the reflector within the calibration surface (6) is specified as movement pattern parameter, the specified paths intersecting with at least one further specified path at at least one point; and
at least for the spectra of at least one spectra selection from the spectra a sub-set of spectra is assigned to each reflector by means of image processing in dependence upon the points of overlap of the specified paths.

10. Method according to any one of the preceding claims,
**characterised in that**
the spectrum of each image point series is created by means of Fourier transformation, especially by means of discrete Fourier transformation.

11. Method according to any one of the preceding claims,
**characterised in that**
the calibration surface (6) at least partly covers, preferably completely covers, an energetic aperture of the radiation receiver;
especially, the calibration surface (6) completely covers the energetic aperture of the radiation receiver (2).

12. Calibration device for a group of reflectors (1) for concentrating solar radiation onto a radiation receiver (2), having a group of reflectors (1), having motor means for positioning each reflector in order to concentrate solar radiation onto a radiation receiver (2), and having at least one camera and a calibration surface, wherein the calibration device has a calibration unit (4) which is designed to co-operate with the motor means and the camera (3) to
A) align the reflectors (1) by means of the motor means so that the calibration surface (6) is at least partly acted upon by solar radiation reflected by the reflectors (1);
B) generate a change in the intensity distribution of the radiation incident on the calibration surface (6) by execution of a movement pattern by each reflector of the group, wherein the movement pattern of each reflector, in at least one movement pattern parameter specified by the calibration device from the group
- *frequency* of the movement,
- *amplitude* of the movement,
- *phase* position of the movement,
- *path* of the solar radiation reflected by the reflector within the calibration surface,
differs from the movement pattern parameters of the other reflectors (1);
C) record series of image points for a plurality of location points at different locations on the calibration surface (6) by means of the camera (3), each image point series having at least five image point recordings staggered in time;
D) establish a spectrum for each image point series by transformation of the image point series into the frequency domain;
E) assign a sub-set of spectra to the reflectors (1) in dependence upon the movement pattern parameter of the reflector;
F) determine one or more reflection target positions for each reflector in dependence upon at least the sub-set of spectra assigned to the reflector.

13. Device according to claim 12,
**characterised in that**
the calibration surface (6) comprises a diffusely reflecting surface (9).

14. Device according to either one of claims 12 and 13,
**characterised in that**
the calibration surface (6) covers the rim of an energetic aperture of the radiation receiver for the solar radiation, preferably covering the rim around its circumference; especially, the calibration surface (6) forms a frame around the energetic aperture.

15. Device according to any one of claims 12 to 14,
**characterised in that**
the device comprises a plurality of cameras which are arranged at different recording angles with respect to the calibration surface (6); and the calibration device is designed to record image point series for a plurality of location points at different locations on the calibration surface (6) by means of the cameras, with each image point series having at least five image point recordings shifted in time.

## Revendications

1. Procédé d'étalonnage d'un groupe de réflecteurs (1) destiné à concentrer le rayonnement solaire sur un récepteur de rayonnement (2), ledit procédé comprenant les étapes suivantes
A) orienter les réflecteurs de manière à appliquer au moins partiellement le rayonnement solaire réfléchi par les réflecteurs (1) sur une surface d'étalonnage (6) ;
B) générer une variation de distribution d'intensité du rayonnement incident à la surface d'étalonnage (6) par réalisation d'un motif de mouvement à travers chaque réflecteur du groupe, le motif de mouvement de chaque réflecteur se distinguant par au moins un paramètre de motif de mouvement prédéterminé du groupe comprenant
- la fréquence du mouvement,
- l'amplitude du mouvement,
- la position de phase du mouvement,
- la trajectoire du rayonnement solaire, réfléchi par le réflecteur, dans la zone d'étalonnage,
des paramètres de motif de mouvement des autres réflecteurs (1) ;
C) enregistrer des rangées de points d'image d'une pluralité de points de localisation différents de la surface d'étalonnage (6) au moyen d'au moins une caméra (3), chaque rangée de points d'image comportant au moins cinq enregistrements de points d'image décalés dans le temps ;
D) déterminer un spectre pour chaque rangée de points d'image par transformation de la rangée de points d'image dans l'espace fréquentiel ;
E) associer un sous-ensemble de spectres aux réflecteurs (1) en fonction du paramètre de motif de mouvement du réflecteur ;
F) déterminer au moins une position de réflexion cible de chaque réflecteur en fonction d'au moins le sous-ensemble de spectres associé au réflecteur.

2. Procédé selon la revendication 1,
**caractérisé en ce que**
un filtrage des spectres est effectué, de préférence un filtrage sur une ou plusieurs fréquences prédéterminées, en particulier **en ce que** le filtrage est effectué dans une étape de procédé D1 située entre les étapes de procédé D et E.

3. Procédé selon l'une des revendications précédentes, **caractérisé en ce que**
chacun des réflecteurs (1) est déplacé périodiquement afin de réaliser une variation périodique de la distribution d'intensité de la surface d'étalonnage (6), en particulier **en ce que** chacun des réflecteurs (1) est déplacé périodiquement en même temps,
de préférence **en ce que** la variation périodique de la distribution d'intensité de la surface d'étalonnage (6), réalisée par le déplacement des réflecteurs (1), est située dans la gamme de fréquences allant de 0,001 Hz à 1 MHz, de préférence dans la gamme allant de 0,01 Hz à 100 Hz, en particulier dans la gamme allant de 0,1 Hz à 10 Hz.

4. Procédé selon la revendication 3,
**caractérisé en ce que**
chaque rangée de points d'image d'une pluralité de périodes de la variation périodique comporte une pluralité d'enregistrements, en particulier au moins cinq enregistrements, de préférence au moins 10, en particulier au moins 50 enregistrements par période.

5. Procédé selon l'une des revendications 3 à 4 précédentes,
**caractérisé en ce que**
une fréquence différente est spécifiée comme paramètre de motif de mouvement pour chaque réflecteur et chaque réflecteur est associé à un sous-ensemble de spectres qui comprend au moins les spectres de la fréquence qui correspond aux paramètres de motif de mouvement du réflecteur,
de préférence chaque réflecteur est associé aux spectres qui comprennent le spectre de la fréquence qui correspond au paramètre de motif de mouvement du réflecteur ou chaque réflecteur est associé à un sous-ensemble de spectres qui comprend les spectres de la fréquence qui correspond au paramètre de motif de mouvement du réflecteur et les spectres d'au moins un multiple entier de la fréquence qui correspond au paramètre de motif de mouvement du réflecteur, en particulier au double de la fréquence.

6. Procédé selon l'une des revendications 3 à 5 précédentes,
**caractérisé en ce que**
une amplitude différente est spécifiée comme paramètre de motif de mouvement pour chaque réflecteur,
une détermination d'amplitude de mouvement est effectuée pour les spectres d'au moins une sélection de spectres à partir des spectres, et
chaque réflecteur est associé à un sous-ensemble de spectres de la sélection de spectres qui présente une amplitude de mouvement qui correspond au paramètre de motif de mouvement Amplitude du réflecteur,
en particulier une sélection de spectres, qui comprend au moins le spectre ayant la fréquence du mouvement du réflecteur, est déterminée pour chaque réflecteur.

7. Procédé selon l'une des revendications précédentes 3 à 6, **caractérisé en ce que**
une phase différente est spécifiée comme paramètre de motif de mouvement pour chaque réflecteur,
une phase est déterminée pour les spectres d'au moins une sélection de spectres parmi les spectres et chaque réflecteur est associé à un sous-ensemble de spectres en fonction du paramètre de motif de mouvement Phase, en particulier une sélection de spectres, qui comprend au moins le spectre ayant la fréquence du mouvement du réflecteur, est déterminée pour chaque réflecteur.

8. Procédé selon l'une des revendications précédentes 3 à 7,
**caractérisé en ce que**
une trajectoire différente est spécifiée comme paramètre de motif de mouvement pour chaque réflecteur,
au moins pour les spectres d'au moins une sélection de spectre parmi les spectres un sous-ensemble de spectres est associé à chaque réflecteur en fonction du paramètre de motif de mouvement Trajectoire au moyen d'un traitement d'image,
en particulier une sélection de spectres, qui comprend au moins le spectre ayant la fréquence du mouvement du réflecteur, est déterminée pour chaque réflecteur pour chaque spectre d'au moins une sélection de spectres.

9. Procédé selon l'une des revendications précédentes, **caractérisé en ce que**
une trajectoire différente du rayonnement solaire réfléchi par le réflecteur est spécifiée, pour chaque réflecteur, dans la surface d'étalonnage (6) en tant que paramètre de motif de mouvement, les trajectoires spécifiées se chevauchant au moins en un point avec au moins une autre trajectoire spécifiée et
un sous-ensemble de spectres est associé à chaque réflecteur, au moins pour les spectres d'au moins une sélection de spectres parmi les spectres, en fonction des points de chevauchement des trajectoires spécifiées au moyen d'un traitement d'image.

10. Procédé selon l'une des revendications précédentes, **caractérisé en ce que**
le spectre de chaque rangée de points d'image est créé au moyen d'une transformation de Fourier, en particulier au moyen d'une transformation de Fourier discrète.

11. Procédé selon l'une des revendications précédentes, **caractérisé en ce que**
la surface d'étalonnage (6) recouvre au moins partiellement, de préférence recouvre complètement, une ouverture énergétique du récepteur de rayonnement,
en particulier la surface d'étalonnage (6) recouvre complètement l'ouverture énergétique du récepteur de rayonnement (2).

12. Dispositif d'étalonnage d'un groupe de réflecteurs (1) destiné à concentrer le rayonnement solaire sur un récepteur de rayonnement (2), ledit dispositif comprenant un groupe de réflecteurs (1), des moyens motorisés de positionnement de chaque réflecteur afin de concentrer le rayonnement solaire sur un récepteur de rayonnement (2) et au moins une caméra et une surface d'étalonnage, le dispositif d'étalonnage comportant une unité d'étalonnage (4) qui est conçue de manière à coopérer avec les moyens motorisés et la caméra (3) pour
A) orienter les réflecteurs à l'aide des moyens motorisés de manière à appliquer au moins partiellement le rayonnement solaire réfléchi par les réflecteurs (1) sur une surface d'étalonnage (6) ;
B) générer une variation de distribution d'intensité du rayonnement incident à la surface d'étalonnage (6) par réalisation d'un motif de mouvement à travers chaque réflecteur du groupe, le motif de mouvement de chaque réflecteur se distinguant par au moins un paramètre de motif de mouvement prédéterminé du groupe comprenant
- la fréquence du mouvement,
- l'amplitude du mouvement,
- la position de phase du mouvement,
- la trajectoire du rayonnement solaire, réfléchi par le réflecteur, dans la zone d'étalonnage,
des paramètres de motif de mouvement des autres réflecteurs (1) ;
C) enregistrer des rangées de points d'image d'une pluralité de points de localisation différents de la surface d'étalonnage (6) au moyen d'au moins une caméra (3), chaque rangée de points d'image comportant au moins cinq enregistrements de points d'image décalés dans le temps ;
D) déterminer un spectre pour chaque rangée de points d'image par transformation de la rangée de points d'image dans l'espace fréquentiel ;
E) associer un sous-ensemble de spectres aux réflecteurs (1) en fonction du paramètre de motif de mouvement du réflecteur ;
F) déterminer une ou plusieurs positions de réflexion cible de chaque réflecteur en fonction d'au moins le sous-ensemble de spectres associé au réflecteur.

13. Dispositif selon la revendication 12,
**caractérisé en ce que**
la surface d'étalonnage (6) comprend une surface de réflexion diffuse (9).

14. Dispositif selon l'une des revendications 12 à 13, **caractérisé en ce que**
la surface d'étalonnage (6) recouvre le bord d'une ouverture énergétique du récepteur de rayonnement pour le rayonnement solaire, recouvre de préférence le bord périphériquement, en particulier la surface d'étalonnage (6) forme un cadre autour de l'ouverture énergétique.

15. Dispositif selon l'une des revendications 12 à 14, **caractérisé en ce que**
le dispositif comprend une pluralité de caméras qui sont disposées à des angles différents par rapport à la surface d'étalonnage (6) et
le dispositif d'étalonnage est conçu pour enregistrer des rangées de points d'image pour une pluralité de points de localisation différents de la surface d'étalonnage (6) au moyen des caméras, chaque rangée de points d'image comportant au moins cinq enregistrements de pixels décalés dans le temps.
